(19) Europäisches Patentamt
European Patent Office
Office européen des brevets

(11) **EP 3 385 433 A1**

(12) **EUROPEAN PATENT APPLICATION**

(43) Date of publication:
**10.10.2018 Bulletin 2018/41**

(51) Int Cl.:
**D04H 3/013** (2012.01)   **B32B 5/26** (2006.01)
**D04H 3/08** (2006.01)

(21) Application number: **17164623.5**

(22) Date of filing: **03.04.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **LENZING AKTIENGESELLSCHAFT
4860 Lenzing (AT)**

(72) Inventors:
• **Carlyle, Tom
  Spanish Fort, AL Alabama 36527 (US)**

• **Einzmann, Mirko
  4600 Wels (AT)**
• **Goldhalm, Gisela
  3363 Neufurth (AT)**
• **Hayhurst, Malcolm John
  Bulkington, Warwickshire CV12 9RZ (GB)**
• **Mayer, Katharina
  4813 Altmünster (AT)**
• **Sagerer Foric, Ibrahim
  4840 Vöcklabruck (AT)**

(74) Representative: **Dilg, Haeusler, Schindelmann
Patentanwaltsgesellschaft mbH
Leonrodstrasse 58
80636 München (DE)**

(54) **NONWOVEN CELLULOSE FIBER FABRIC WITH TAILORED LIQUID WICKING CAPABILITY**

(57)     It is described a nonwoven cellulose fiber fabric (102) directly manufactured from a lyocell spinning solution (104). The fabric (102) comprises a network of substantially endless fibers (108). The fabric (102) is characterized by at least one of the following features:
(i) a rate of liquid spread is at least 3000 mm2 within 5 minutes ;
(ii) a water absorbing capability is characterized by a wicking speed of at least 0.25 gram water per 1 gram fabric and 1 second. It is further described a method and a device for manufacturing such a fabric (102), a product or composite comprising such a fabric, and various use applications for such a fabric (102).

Fig. 11

**EP 3 385 433 A1**

## Description

Field of invention

The invention relates to a nonwoven cellulose fiber fabric, a method of manufacturing a nonwoven cellulose fiber fabric, a device for manufacturing a nonwoven cellulose fiber fabric, a product or composite, and a method of use for such a fabric.

Background of the invention

Lyocell technology relates to the direct dissolution of cellulose wood pulp or other cellulose-based feedstock in a polar solvent (for example n-methyl morpholine n-oxide, which may also be denoted as "amine oxide" or "AO") to produce a viscous highly shear-thinning solution which can be transformed into a range of useful cellulose-based materials. Commercially, the technology is used to produce a family of cellulose staple fibers (commercially available from Lenzing AG, Lenzing, Austria under the trademark TENCEL®) which are widely used in the textile industry. Other cellulose products from lyocell technology have also been used.

Cellulose staple fibers have long been used as a component for conversion to nonwoven webs. However, adaption of lyocell technology to produce nonwoven webs directly would access properties and performance not possible for current cellulose web products. This could be considered as the cellulosic version of the meltblow and spunbond technologies widely used in the synthetic fiber industry, although it is not possible to directly adapt synthetic polymer technology to lyocell due to important technical differences.

Much research has been carried out to develop technology to directly form cellulose webs from lyocell solutions (inter alia, WO 98/26122, WO 99/47733, WO 98/07911, US 6,197,230, WO 99/64649, WO 05/106085, EP 1 358 369, EP 2 013 390). Further art is disclosed in WO 07/124521 A1 and WO 07/124522 A1.

Like other cellulose materials nonwoven cellulose fiber fabric has a limited speed for absorbing liquids, in particular water or aqueous solutions or dispersions. However, for many applications of nonwoven cellulose fiber fabrics such as for a web a high liquid absorbing speed or liquid absorption speed is desirable.

Summary of the Invention

There may be a need for improving the speed for absorbing liquid by means of a nonwoven cellulose fiber fabrics.

This need may be met by the subject matter according to the independent claims. Advantageous embodiments of the present invention are described by the dependent claims.

According to a first aspect of the invention there is provided a nonwoven cellulose fiber fabric which may be directly manufactured from a lyocell spinning solution. The provided fabric comprises a network of substantially endless fibers. The provided fabric exhibits a water absorbing capability with a rate of liquid spread of at least 3000 mm2 within 5 minutes. Alternatively or in combination the fabric may exhibit a water absorbing capability with a rate of liquid spread of at least 3500 mm2 within 24 hours.

The provided fabric, in following often referred to as simply a "fabric", is based on the idea that by using appropriate process parameters for manufacturing the fabric in particular directly from a lyocell spinning solution a nonwoven cellulose fiber fabric or fiber web can be provided which exhibits, at least compared to know cellulose products, an increased water absorbing capability which is reflected by an extraordinary high rate of liquid spread for the test liquid water. This increases for many applications the efficiency for a corresponding nonwoven cellulose fiber fabric product or opens nonwoven cellulose fiber fabric products for new applications.

The values for the rate of liquid spread described in this document relate to a "rate of liquid spread test" wherein 0.5 ml of a test fluid is carefully respectively slowly supplied onto the (surface of a) sample, i.e. the respective fabric, by means of a pipette. The sample under test has a "mass per unit area", which is often also denominated basis weight. The test fluid is distilled water including a green dye in a concentration of 2 gram per liter. The used dye in German language is denominated "Sulfacidebrilliantgrun". The dye allows for a quantitative evaluation of the "rate of spread" measurement with a commercially available camera, e.g. a Canon camera of the type ixus. Typical time points at which the liquid spread can be detected with the camera are 5 minutes after the supply of the test fluid and 24 hours after the supply of the test fluid onto (the surface of) the sample under test.

For the "rate of liquid spread test" the fabric has to be conditioned, before starting with the test, in a fully dry state. Thereby, "fully dry" means that after manufacturing the fabric (which includes a drying procedure) the fabric has been conditioned for 24 hours at a standard climate being defined with a temperature of 23°C +- 2°C, with a relative humidity of 50% +- 5%. All measurements, unless notified otherwise, have been performed under this standard climate. By contrast thereto, the term "full wet" may mean that the fabric is fully loaded with water, i.e. no more water can be absorbed.

Without being bound to a specific theory, it is presently believed that the capillarity of a nonwoven cellulose fiber fabric has a strong influence on the water absorbing capability and in particular on the water absorbing speed which is associated with the above specified rate of liquid spread. Specifically, the capillarity is associated with the number and the size of (micro) cavities or channels formed between neighboring fibers which cavities provide a more or less appropriate accommodation space for water particles.

Further, experimental studies for the process for manufacturing nonwoven cellulose fiber fabric revealed that by using appropriate process parameters a nonwoven cellulose fiber fabric or fiber web can be produced which exhibits, at least compared to know cellulose products and products made from polymer fibers, an increased rate of liquid spread for water being absorbed. This increases for many application the efficiency for a corresponding nonwoven cellulose fiber fabric product or opens nonwoven cellulose fiber fabric products for new applications.

It is pointed out that the matter of fact that endless fibers are used may be very important when large values for liquid spreading are desired. By contrast to known fabrics made from comparatively short staple fibers the fabrics described in this document are made from (substantially endless) fibers which are much longer. As a consequence, within described fabrics the density of fiber ends is significantly smaller resulting in a reduced barrier for liquid travelling along the fibers. In this context every gap being associated with a fiber end contributes to the barrier for liquid propagating trough the fabric.

Further, by contrast to synthetic polymeric endless fibers the cellulose endless fibers used for the described fabric exhibit a swelling upon liquid absorption. Such a swelling has an effect on submicron channels which promote the capability of the fabric with regard to liquid spreading. Furthermore, also merging points between different fibers consist of material which swells upon absorption of liquid. Therefore, also the merging points promote liquid spreading. As a consequence, adapting the merging factor may also be used as a measure for tailoring the rate of liquid spread towards desired values. Further details regarding merging points are described further below.

Improving the liquid spread for water being absorbed in particular for fabrics having a small mass per unit area may have the advantage that the described fabric can be used for a large variety of applications, which require for instance a thin wipe. In this context it is mentioned that a fabric having a high water absorption speed may also have a high absorbing capability for other liquids. This holds in particular for water based liquids. i.e. for liquids where water acts as a solvent.

In the context of this application, the term "nonwoven cellulose fiber fabric" (which may also be denoted as nonwoven cellulose filament fabric) may particularly denote a fabric or web composed of a plurality of substantially endless fibers. The term "substantially endless fibers" has in particular the meaning of filament fibers having a significantly longer length than conventional staple fibers. In an alternative formulation, the term "substantially endless fibers" may in particular have the meaning of a web formed of filament fibers having a significantly smaller amount of fiber ends per volume than conventional staple fibers. In particular, endless fibers of a fabric according to an exemplary embodiment of the invention may have an amount of fiber ends per volume of less than 10,000 ends/cm$^3$, in particular less than 5,000 ends/cm$^3$. For instance, when staple fibers are used as a substitute for cotton, they may have a length of 38 mm (corresponding to a typical natural length of cotton fibers). In contrast to this, substantially endless fibers of the nonwoven cellulose fiber fabric may have a length of at least 200 mm, in particular at least 1000 mm. However, a person skilled in the art will be aware of the fact that even endless cellulose fibers may have interruptions, which may be formed by processes during and/or after fiber formation. As a consequence, a nonwoven cellulose fiber fabric made of substantially endless cellulose fibers has a significantly lower number of fibers per mass compared to nonwoven fabric made from staple fibers of the same denier. A nonwoven cellulose fiber fabric may be manufactured by spinning a plurality of fibers and by attenuating and stretching the latter towards a preferably moving fiber support unit. Thereby, a three-dimensional network or web of cellulose fibers is formed, constituting the nonwoven cellulose fiber fabric. The fabric may be made of cellulose as main or only constituent.

In the context of this application, the term "lyocell spinning solution" may particularly denote a solvent (for example a polar solution of a material such as N-methyl-morpholine, NMMO, "amine oxide" or "AO") in which cellulose (for instance wood pulp or other cellulose-based feedstock) is dissolved. The lyocell spinning solution is a solution rather than a melt. Cellulose filaments may be generated from the lyocell spinning solution by reducing the concentration of the solvent, for instance by contacting said filaments with water. The process of initial generation of cellulose fibers from a lyocell spinning solution can be described as coagulation.

In the context of this application, the term "gas flow" may particularly denote a flow of gas such as air substantially parallel to the moving direction of the cellulose fiber or its preform (i.e. lyocell spinning solution) while and/or after the lyocell spinning solution leaves or has left the spinneret.

In the context of this application, the term "coagulation fluid" may particularly denote a non-solvent fluid (i.e. a gas and/or a liquid, optionally including solid particles) which has the capability of diluting the lyocell spinning solution and exchanging with the solvent to such an extent that the cellulose fibers are formed from the lyocell filaments. For instance, such a coagulation fluid may be water mist.

In the context of this application, the term "process parameters" may particularly denote all physical parameters and/or chemical parameters and/or device parameters of substances and/or device components used for manufacturing nonwoven cellulose fiber fabric which may have an impact on the properties of the fibers and/or the fabric, in particular on fiber diameter and/or fiber diameter distribution. Such process parameters may be adjustable automatically by a control unit and/or manually by a user to thereby tune or adjust the properties of the fibers of the nonwoven cellulose fiber fabric. Physical parameters which may have an impact on the properties of the fibers (in particular on their diameter or diameter distribution) may be temperature, pressure and/or density of the various media involved in the process (such as the lyocell spinning solution, the coagulation fluid, the gas flow, etc.). Chemical parameters may be concentration, amount, pH value of involved media (such as the lyocell spinning solution, the coagulation fluid, etc.). Device parameters may be size of and/or distances between orifices, distance between orifices and fiber support unit, speed of transportation of fiber support unit, the provision of one or more optional *in situ* post processing units, the gas flow, etc.

The term "fibers" may particularly denote elongated pieces of a material comprising cellulose, for instance roughly round or non-regularly formed in cross-section, optionally twisted with other fibers. Fibers may have an aspect ratio which is larger than 10, particularly larger than 100, more particularly larger than 1000. The aspect ratio is the ratio between the length of the fiber and a diameter of the fiber. Fibers may form networks by being interconnected by merging (so that an integral multi-fiber structure is formed) or by friction (so that the fibers remain separate but are weakly mechanically coupled by a friction force exerted when mutually moving the fibers being in physical contact with one another). Fibers may have a substantially cylindrical form which may however be straight, bent, kinked, or curved. Fibers may consist of a single homogenous material (i.e. cellulose). However, the fibers may also comprise one or more additives. Liquid materials such as water or oil may be accumulated between the fibers.

According to an embodiment of the invention the rate of liquid spread within 5 minutes is at least 4000 mm2, in particular 5000 mm2, and further in particular 5500 mm2. Alternatively or in combination the rate of liquid spread within 24 hours may be at least 4500 mm2, in particular 5500 mm2, and further in particular 6000 mm2.

According to a further embodiment of the invention along a first direction within the fabric the rate of liquid spread has a first value and along a second direction within the fabric the rate of liquid spread has a second value, the second direction being perpendicular to the first direction value. The first value and the second value differ from each other by less than 20%, in particular by less than 10%. This indicates that the fabric described with this embodiment exhibits an at least approximately isotropic behavior with regard to the rate of liquid spread. It is mentioned that the same may also hold true for an isotropic behavior of the wicking speed.

According to a further embodiment of the invention along a first direction within the fabric the rate of liquid spread has a first value and along the second direction within the fabric the rate of liquid spread has a second value, the second direction being perpendicular to the first direction value. The first value and the second value differ from each other by more than 20 %, in particular by more than 30 % and further in particular by more than 40 %. This indicates that the fabric described with this embodiment exhibits a pronounced anisotropic behavior with regard to the rate of liquid spread. It is mentioned that the same may also hold true for an anisotropic behavior of the wicking speed.

In this document the term "differ from each other by X%" may particularly denote that a ratio between the first value and the second value, multiplied by 100%, wherein 100% is subtracted from the obtained result, gives a value of X%.

This embodiment of the invention relies on the idea that with the laydown of the spun fibers on a fiber support unit, in particular on a conveyor belt, there is at least to a certain degree a preferred direction with regard to the (average) orientation of the substantially endless fibers with regard to the transport direction of the fiber support unit. However, the degree of the preferred direction, i.e. an angular spread of the fibers with regard to the transport direction, can be adjusted by appropriately setting at least some process parameters of the lyocell spinning solution process.

In this respect one process parameter, the effect of which for the angular spread of the fibers can be easily understood, is a potential appliance of gas turbulences within a coagulation region extending in between (a) orifices through which the lyocell spinning solution is extruded and (b) the upper surface of the fiber support unit.

A liquid spreading by means of a cellulose fabric is based in particular on capillary forces generated within micro cavities which are located between neighboring fibers. Therefore, by adjusting the degree (of spread) of the preferred (average) fiber direction a spatial isotropy respectively a spatial anisotropy with regard to the wicking speed direction within the fabric can be adjusted.

According to a further aspect of the invention there is provided a nonwoven cellulose fiber fabric, in particular directly manufactured from a lyocell spinning solution. The fabric comprises a network of substantially endless fibers. The provided fabric exhibits a water absorbing capability with a wicking speed of at least 0.25 gram water per 1 gram fabric and 1 second.

Also the described fabric according to this further aspect of the invention is based on the idea that by using appropriate process parameters for manufacturing the fabric in particular directly from a lyocell spinning solution a nonwoven cellulose fiber fabric or fiber web can be provided which exhibits, at least compared to know cellulose products, an increased water absorbing capability which is reflected by an extraordinary high wicking speed for water being the test liquid. This increases for many application the efficiency for a corresponding nonwoven cellulose fiber fabric product or opens nonwoven cellulose fiber fabric products for new applications.

The values for the wicking speed described in this document relate to a "wicking speed test" wherein the sample under test (i.e. the respective fabric) is conditioned in a fully dry state. This fully dry state has already been defined above in connection with the description of the liquid spread test.

In the "wicking speed test" the sample under test is placed onto a test table. At its center, the test table is connected via an opening and a channel with a liquid reservoir. The liquid reservoir is filled with distilled water. The height of the test table corresponds exactly to the filling level of the water within the liquid reservoir. Thereby, it is ensured that no hydrostatic pressure is present and the suction respectively the wicking of the sample under test is generated exclusively by the suction power of the sample under test.

During the actual "wicking speed test" the volume of the water, which is absorbed by the sample under test, is continuously refilled into the liquid reservoir with a syringe. This means that the level of the liquid is always kept constant. The volume of the refilled water is converted into the mass of the refilled water (via the known density of mass of distilled water). It is obvious that with this procedure the wicking speed decreases with time because the suction power of the sample under test decreases with an increasing "absorption load" of the sample under test caused by the absorbed water. The procedure of refilling is continued until for the refilling of water a threshold value of 0.005g per 20 seconds is reached. A measurement curve depicting the mass of added water as a function of time is recorded and evaluated. In this document the wicking speed is the slope of this measurement curve with a first time slot of 10 seconds starting from the beginning of the actual test. The measured values are normalized per 1 gram of the respective fabric.

It is pointed out that the matter of fact that endless fibers are used may also be very important when large parameter values for the wicking speed are desired. By contrast to fabrics made from shorter staple fibers the fabrics described in this document are made from much longer (substantially endless) fibers. As a consequence, within described fabrics the density of fiber ends and, as a consequence also the barrier for liquid travelling along the fibers, is significantly smaller.

Further, the cellulose endless fibers used for the described fabric exhibit a swelling upon liquid absorption. Such a swelling has an effect on the formation and/or the size of submicron channels which promote the wicking capability. Furthermore, also merging points between different fibers consist of material which sell upon absorption of liquid. Therefore, also the merging points promote liquid spreading and wicking. As a consequence, the merging factor may also be a parameter for tailoring the wicking speed towards desired values.

According to an embodiment of the invention the wicking speed of the described fabric is at least 0.35 gram water per 1 gram fabric and 1 second, in particular at least 0.35 gram water per 1 gram fabric and 1 second, and further in particular at least 0.40 gram water per 1 gram fabric and 1 second.

According to a further embodiment of the invention at least a part of the fibers 108 are integrally merged at merging positions. In particular or preferably, a merging factor of the fibers is in a range between 0.2% and 100%, in particular in a range between 0,5% and 15%.

In this document the term "merging" may particularly denote an integral interconnection of different fibers at the respective merging position which results in the formation of one integrally connected fiber structure composed of the previously separate fiber preforms. Merging may be denoted as a fiber-fiber connection being established during coagulation of one, some or all of the merged fibers. Interconnected fibers may strongly adhere to one another at a respective merging position without a different additional material (such as a separate adhesive) so as to form a common structure. Separation of merged fibers may require destruction of the fiber network or a part thereof.

For determining the merging factor (which may also be denoted as area merging factor) of fabric, the following determination process may be carried out: A square sample of the fabric may be optically analyzed. A circle, which has a diameter which has to stay fully inside the square sample, is drawn around each merging position (in particular merging point or merging line) of fibers crossing at least one of the diagonals of the square sample. The size of the circle is determined so that the circle encompasses the merging area between the merged fibers. An arithmetic average of the values of the diameter of the determined circles is calculated. The merging factor is calculated as ratio between the averaged diameter value and the diagonal length of the square sample, and may be given in percent.

Merging may be triggered by a corresponding control of the process parameters of a method of manufacturing the nonwoven cellulose fiber fabric. In particular, coagulation of filaments of lyocell spinning solution may be triggered (or at least completed) after the first contact between these filaments being not yet in the precipitated solid fiber state. Thereby, interaction between these filaments while still being in the solution phase and then or thereafter converting them into the solid-state phase by coagulation allows to properly adjust the merging characteristics. A degree of merging is a powerful parameter which can be used for adjusting the properties of the manufactured fabric. In particular, mechanical stability of the network is the larger the higher the density of merging positions is. By an inhomogeneous distribution of merging positions over the volume of the fabric, it is also possible to adjust regions of high mechanical stability and other regions of low mechanical stability. For instance, separation of the fabric into separate parts can be precisely defined to happen locally at mechanical weak regions with a low number of merging positions. In a preferred embodiment, merging between fibers is triggered by bringing different fiber preforms in form of lyocell spinning solution in direct contact with one another prior to coagulation. By such a coagulation process, single material common precipitation of the fibers is executed, thereby forming the merging positions.

The described merging factor is a highly characteristic parameter for the networking between different fibers of the fabric's fiber network. A merging factor of zero percent corresponds to a fabric without merging points, i.e. completely separate fibers interacting with one another only by friction. A merging factor of one hundred percent corresponds to a fabric consisting of merging points, i.e. completely integral fibers forming a continuous structure such as a film. By adjusting the merging factor, also the physical properties (in particular the mechanical stability) of the corresponding fabric may be precisely adjusted.

Depending on the specific structure and in particular depending on the merging factor the merging positions may comprise (a) a merging point at which fibers are merged with a point contact; (b) a merging line along which fibers are mutually aligned side-by-side at least over a portion of their length to form a superordinate fiber structure. A merging point may be a dot-like structure made of the same material as the interconnected fibers. A merging line may be considered as a merging position having an oblong shape of a line significantly larger than a diameter of the fibers connected along the merging line. A merging line may hence be an extended structure connecting fibers along a section along which the fibers extend in parallel or side-by-side.

According to a further embodiment of the invention different ones of the fibers are located at least partially in different distinguishable layers and the fabric comprises in particular at least one of the following features: (a) fibers of different layers are integrally connected at at least one position between the layers; (b) different ones of the fibers being located at least partially in different layers differ concerning fiber diameter, in particular differ concerning an averaged fiber diameter; (c) fibers of different layers have the same fiber diameter, in particular have substantially the same averaged fiber diameter; (d) fiber networks of different layers provide different functionality, wherein the different functionality in particular comprises at least one of the group consisting of different wicking, different anisotropic behavior, different liquid absorbing capability, different cleanability, different optical properties, different roughness, different smoothness, and different mechanical properties.

In the context of this document "different ones of the fibers being located at least partially in different distinguishable layers" may mean that the respective layers show a visible separation or interface region in between at least within an image captured e.g. by means of an electron microscope. As specified with above feature (a) the different layers may be integrally connected at at least one merging position. Thereby, for instance two (or more) different layers of a fabric may be formed by serially aligning two (or more) jets with orifices through which lyocell spinning solution is extruded for coagulation and fiber formation. When such an arrangement is combined with a moving (conveyor belt type) fiber support unit, a first layer of fibers is formed on the fiber support unit by the first jet, and the second jet forms a second layer of fibers on the first layer when the moving fiber support unit reaches the position of the second jet. The process parameters of this method may be adjusted so that merging points are formed between the first layer and the second layer. As has already been mentioned above, "merging" may denote an interconnection of different fibers at the respective merging point which results in the formation of one integrally connected fiber structure composed of the previously two separate fibers which previously have been associated with different layers. In particular, fibers of the second layer under formation being not yet fully cured or solidified by coagulation may for example still have exterior skin or surface regions which are still in the liquid lyocell solution phase and not yet in the fully cured solid state. When such pre-fiber structures come into contact with one another and fully cure into the solid fiber state thereafter, this may result in the formation of two merged fibers at an interface region being located between different respectively neighboring layers.

As specified with above feature (b) different ones of the fibers being located at least partially in different layers differ concerning fiber diameter, in particular differ concerning an averaged fiber diameter. When different layers of the described fabric are formed of fibers having different (average) fiber diameters, the mechanical properties of the different layers may be adjusted individually. For example, one of the layers may be provided with a stiff character by using fibers having a relatively large fiber diameter, whereas the other layer may be provided with a smooth or elastic character (for example by using fibers having a relatively low fiber diameter). For instance, a wipe can be manufactured having a comparatively rough surface for cleaning by mechanically removing dirt and having a comparatively smooth surface for wiping, i.e. being configured for absorbing water or the like from a surface to be cleaned.

However, as specified with above feature (c) it is alternatively also possible that fibers of different layers have the same diameter, in particular have the same average diameter. In such an embodiment, adjacent layers may have similar or identical physical properties. They may be interconnected strongly or weakly at merging points in between. The number of such merging points per interface area may define the coupling strength between adjacent layers. With a small coupling strength, the layers may be easily separated by a user. With a high coupling strength, the layers may remain permanently attached to one another.

It is mentioned that for mutually attaching the neighboring layers within the described multilayer structure there is no need for any additional adhesion material such as a binder. As a consequence, liquid can spread through the respective layer interface without any hindrance.

According to a further embodiment of the invention the fiber network comprises at least one of the following features:

(a) within one and the same fiber different fiber sections differ concerning fiber diameter by more than 50% in relation to the smallest diameter of this fiber;
(b) different fibers differ concerning fiber diameter by more than 50% in relation to the smallest diameter of one of the fibers.

In this document the term "differ concerning fiber diameter by more than 50% in relation to the smallest diameter" may particularly denote that a ratio between largest fiber diameter and the smallest fiber diameter, multiplied by 100%, wherein 100% is subtracted from the obtained result, gives a value above 50%. "Differ concerning fiber diameter by more than 50% in relation to the smallest diameter" may mean that a ratio between a largest fiber diameter and a smallest fiber diameter is more than 1.5.

In case of such a large fiber diameter variation within one and the same fiber as specified with above given feature (a), the inhomogeneity concerning diameter may be considered as to represent an intra fiber diameter variation. Without wishing to be bound to a specific theory, it is presently believed that when such fibers form a network in the fabric, the inhomogeneity of the diameter of a respective fiber increases the friction force which has to be overcome when moving the various fibers relative to one another within the fabric. A result of this effect is an increased mechanical stability of the fabric.

In case of such a large fiber diameter variation among different fibers as specified with above given feature (b), the inhomogeneity in terms of diameter may be denominated an inter fiber diameter variation. In such an embodiment, a respective fiber itself may show a diameter homogeneity or inhomogeneity, but different fibers differ concerning diameter in a fiber by fiber comparison. In such a scenario, interaction of fibers of different diameters or different diameter distributions may result in a stronger bending of thinner fibers and only slight bending of thicker fibers. When such fibers of different diameter form a network in the fabric, the increased disorder inhibits mutual motion of different fibers relative to one another. A result of this phenomenon is an increased stability of the fabric.

According to a further embodiment of the invention the fiber network comprises at least one of the following features:

(a) at least 3%, in particular at least 5%, of the fibers have a non-circular cross sectional shape having a roundness of not more than 90%;
(b) at least 1%, in particular at least 3%, of the fibers have a non-circular cross sectional shape having a roundness of not more than 80%, in particular of not more than 70%.

In this context the term "roundness" may particularly denote the ratio between the inscribed circle and the circumscribed circle of a cross section of a fiber, i.e. the maximum size and the minimum size for circles that are just sufficient to fit inside the fiber's cross section respectively to enclose or encompass the fiber's cross section. For determining the roundness, a cross sectional plane perpendicular to an extension direction of the fiber may be intersected with the fiber. Thus, roundness may be denoted as the measure of how closely the cross sectional shape of a respective fiber approaches that of a circle having a roundness of 100%.

For example, the cross-section of a fiber may have an oval (in particular elliptic) shape or may have a polygonal shape. More generally, a trajectory defining the exterior limits of a cross-section of a fiber may be any closed planar line showing a deviation from a circle. The cross-section of a fiber may be entirely round or may have one or more sharp or rounded edges.

Descriptively speaking, the fibers of the fabric described with this embodiment exhibit a significant deviation from an entirely circular cylindrical shape. From a mechanical point of view, this yields that a preferred bending direction of the fibers in the presence of a mechanical load is defined by the design of the cross-section of the fiber. For instance, when the fiber has an elliptic cross sectional shape with two main axes (i.e. major axis and minor axis) having different lengths, bending in the presence of an exerted force will occur predominantly with the minor axis as a bending line. Thus, the bending characteristics of such a fiber fabric is no longer statistical and unpredictable, but increases the defined order of the nonwoven cellulose fiber fabric. Apart from having a strong influence on the mechanical stability of the fabric (in at least on direction) the (average) bending radius is also parameter which affects the size and the shape of cavities which may be formed in between different fibers and also the size and the shape of micro cavities formed within the inner structure of one fiber.

Therefore, when taking into account the above given considerations regarding the influence of the number, the size, and/or the shape of cavities on the water absorbing capability it should be clear that also the (roundness dependent) average bending has also a strong influence on the water spreading and wicking capability.

According to a further embodiment of the invention the fibers have a copper content of less than 5 ppm and/or have a nickel content of less than 2 ppm.

The ppm values mentioned in this document all relate to mass (rather than to volume). Apart from this, the heavy metal contamination of the fibers or the fabric may be not more than 10 ppm for each individual heavy metal element. Due to the use of a lyocell spinning solution as a basis for the formation of the endless fiber-based fabric (in particular when involving a solvent such as N-methyl-morpholine, NMMO), the contamination of the fabric with heavy metals such as copper or nickel (which may cause allergic reactions of a user) may be kept extremely small.

Depending on the value or degree of the fiber diameter and/or the intra fiber and/or inter fiber diameter inhomogeneity and/or fabric density, the active fiber surface may be adjusted as well as the volume of and spacing between gaps between adjacent fibers. This has an impact on the capability of liquid to accumulate in the gaps, for instance under the influence of a capillary effect.

In more detail, the described liquid absorbing capability may be based on the matter of fact that the nonwoven fiber fabric or fiber web can be considered as a structure comprising cavities or voids in between various neighboring fibers. In the original non soaked state of the fabric these voids are filled with air. When the fabric absorbs liquid, the voids get filled with liquid (water, emulsions, oil).

According to a further aspect of the invention there is provided a method of manufacturing nonwoven cellulose fiber fabric, in particular a fabric as described above, directly from a lyocell spinning solution. The provided method comprises (a) extruding the lyocell spinning solution through a jet with orifices supported by a gas flow into a coagulation fluid atmosphere to thereby form substantially endless fibers; (b) collecting the fibers on a fiber support unit to thereby form the fabric; and (c) adjusting process parameters of the manufacturing process so that the fabric is characterized by at least one of the following features:

> (i) a rate of liquid spread is at least 3000 mm2 within 5 minutes;
> (ii) a water absorbing capability is characterized by a wicking speed of at least 0.25 gram water per 1 gram fabric and 1 second. Alternatively or in combination the rate of liquid spread may be at least 3500 mm2 within 24 hours.

Also the described method is based on the idea that with an appropriate selection of process parameters an in many respect improved nonwoven cellulose fiber fabric as described above can be manufactured in an effective and reliable manner.

With regard to given values for the parameters "rate of liquid spread" and "wicking speed" reference is made to the elucidations above.

In the context of this document a "jet with orifices" (which may for instance be denoted as an "arrangement of orifices") may be any structure comprising an arrangement of orifices which are linearly arranged.

It is mentioned that a variation of the diameter of different fibers is produced by controlling the coagulation of fibers. Put in other words, originally at least two different fibers being arranged at least approximately in a parallel orientation can merge with each other (along a common merging line) such that a fiber with a significantly increased diameter will be generated. By controlling (the values of) the process parameters the probability of such a lengthy fiber merge can be selected. As a consequence, the ratio between the merged (thicker) fibers and original (thinner) fibers can be adjusted for instance by adjusting the distance between neighboring orifices of the jet through which the viscous lyocell spinning solution is extruded. In this respect it should be clear that the smaller the distance is the more probable is a merging between two fibers.

Using a turbulent stream of coagulation fluid one could disturb the spatial distances between different not yet (fully) coagulated fibers. As a consequence, the probability that two fibers meet each other on their way from the jet to the fiber support unit can be increased.

It is mentioned that also a merging from three or even more originally individual fibers can be realized. As a consequence, even thicker fibers can be produced such that the fiber diameter variation will be increased.

With regard to the relevance of "merging" for the main properties of the fabric described in this document, i.e. the water absorbing capability in the context of "rate of liquid spread" and/or "wicking speed" reference is made to the sections above elucidating exemplary physical theories for the dependency of these main properties from merging.

According to a further aspect of the invention there is provided a device for manufacturing nonwoven cellulose fiber fabric directly from a lyocell spinning solution and in particular for manufacturing a fabric as described above. The provided device comprises (a) a jet with orifices configured for extruding the lyocell spinning solution supported by a gas flow; (b) a coagulation unit configured for providing a coagulation fluid atmosphere for the extruded lyocell spinning solution to thereby form substantially endless fibers; (c) a fiber support unit configured for collecting the fibers to thereby form the fabric; and (d) a control unit configured for adjusting process parameters so that the fabric is characterized by at least one of the following features:

> (i) a rate of liquid spread is at least 3000 mm2 within 5 minutes;
> (ii) a water absorbing capability is characterized by a wicking speed of at least 0.25 gram water per 1 gram fabric and 1 second. Alternatively or in combination the rate of liquid spread may be at least 3500 mm2 within 24 hours.

The described device is based on the idea that the control unit allows to carry out in a reliable manner the above described method for manufacturing the further above described nonwoven cellulose fiber fabric.

A nonwoven cellulose fiber fabric according to an exemplary embodiment of the invention may also be combined (for instance *in situ* or in a subsequent process) with one or more other materials, to thereby form a composite according to an exemplary embodiment of the invention. Exemplary materials, which can be combined with the fabric for forming such a composite may be selected from a group of materials comprising, but not being limited to, the following materials or combinations thereof: fluff pulp, a fiber suspension, a wetlaid nonwoven, an airlaid nonwoven, a spunbond web, a meltblown web, a carded spunlaced or needlepunched web or other sheet like structures made of various materials. In an embodiment, the connection between the different materials can be done by (but not limited to) one or a combination of the following processes: merging, hydroentanglement, needle punching, hydrogen bonding, thermobonding, gluing by a binder, laminating, and/or calendering.

According to a further aspect of the invention there is provided a method of using a nonwoven cellulose fiber fabric as described above for at least one of the group consisting of a wipe, a household sheet, a filter, a hygiene product, a medical application product, a geotextile, agrotextile, clothing, a product for building technology, an automotive product, a furnishing, an industrial product, a product related to leisure, beauty, sports or travel, and a product related to school or office.

According to a further aspect of the invention there is provided a product or composite comprising a nonwoven cellulose fiber fabric as described above.

Particular uses of the webs, either 100% cellulose fiber webs, or for example webs comprising or consisting of two or more fibers, or chemically modified fibers or fibers with incorporated materials such as anti-bacterial materials, ion exchange materials, active carbon, nano particles, lotions, medical agents or fire retardants, or bicomponent fibers may be as follows:

The nonwoven cellulose fiber fabric according to exemplary embodiments of the invention may be used for manufacturing wipes such as baby, kitchen, wet wipes, cosmetic, hygiene, medical, cleaning, polishing (car, furniture), dust, industrial, duster and mops wipes.

It is also possible that the nonwoven cellulose fiber fabric according to exemplary embodiments of the invention is used for manufacturing a filter. For instance, such a filter may be an air filter, a HVAC, air condition filter, flue gas filter, liquid filters, coffee filters, tea bags, coffee bags, food filters, water purification filter, blood filter, cigarette filter; cabin filters, oil filters, cartridge filter, vacuum filter, vacuum cleaner bag, dust filter, hydraulic filter, kitchen filter, fan filter, moisture exchange filters, pollen filter, HEVAC/HEPA/ULPA filters, beer filter, milk filter, liquid coolant filter and fruit juices filters.

In yet another embodiment, the nonwoven cellulose fiber fabric may be used for manufacturing absorbent hygiene products. Examples thereof are an acquisition layer, a coverstock, a distribution layer, an absorbent cover, sanitary pads, topsheets, backsheets, leg cuffs, flushable products, pads, nursing pads, disposal underwear, training pants, face masks, beauty facial masks, cosmetic removal pads, washcloths, diapers, and sheets for a laundry dryer releasing an active component (such as a textile softener).

In still another embodiment, the nonwoven cellulose fiber fabric may be used for manufacturing a medical application product. For instance, such medical application products may be disposable caps, gowns, masks and shoe cover, wound care products, sterile packaging products, coverstock products, dressing materials, one way clothing, dialyses products, nasal strips, adhesives for dental plates, disposal underwear, drapes, wraps and packs, sponges, dressings and wipes, bed linen, transdermal drug delivery, shrouds, underpads, procedure packs, heat packs, ostomy bag liners, fixation tapes and incubator mattresses.

In yet another embodiment, the nonwoven cellulose fiber fabric may be used for manufacturing geotextiles. This may involve the production of crop protection covers, capillary matting, water purification, irrigation control, asphalt overlay, soil stabilisation, drainage, sedimentation and erosion control, pond liners, impregnation based, drainage channel liners, ground stabilisation, pit linings, seed blankets, weed control fabrics, greenhouse shading, root bags and biodegradable plant pots. It is also possible to use the nonwoven cellulose fiber fabric for a plant foil (for instance providing a light protection and/or a mechanical protection for a plant, and/or providing the plant or soil with dung or seed).

In another embodiment, the nonwoven cellulose fiber fabric may be used for manufacturing clothing. For example, interlinings, clothing insulation and protection, handbag components, shoe components, belt liners, industrial headwear/foodwear, disposable workwear, clothing and shoe bags and thermal insulation may be manufactured on the basis of such fabric.

In still another embodiment, the nonwoven cellulose fiber fabric may be used for manufacturing products used for building technology. For instance, roofing and tile underlay, underslating, thermal and noise insulation, house wrap, facings for plaster board, pipe wrap, concrete moulding layers, foundations and ground stabilisation, vertical drainages, shingles, roofing felts, noise abatement, reinforcement, sealing material, and damping material (mechanical) may be manufactured using such fabric.

In still another embodiment, the nonwoven cellulose fiber fabric may be used for manufacturing an automotive product. Examples are a cabin filter, boot liners, parcel shelves, heat shields, shelf trim, moulded bonnet liners, boot floor covering, oil filter, headliners, rear parcel shelves, decorative fabrics, airbags, silencer pads, insulation materials, car covers, underpadding, car mats, tapes, backing and tufted carpets, seat covers, door trim, needled carpet, and auto carpet backing.

Still another field of application of fabric manufactured according to exemplary embodiments of the invention are furnishings, such as furniture, construction, insulator to arms and backs, cushion thicking, dust covers, linings, stitch reinforcements, edge trim materials, bedding constructions, quilt backing, spring wrap, mattress pad components, mattress covers, window curtains, wall coverings, carpet backings, lampshades, mattress components, spring insulators, sealings, pillow ticking, and mattress ticking.

In yet another embodiment, the nonwoven cellulose fiber fabric may be used for manufacturing industrial products. This may involve electronics, floppy disc liners, cable insulation, abrasives, insulation tapes, conveyor belts, noise absorbent layers, air conditioning, battery separators, acid systems, anti-slip matting stain removers, food wraps, adhesive tape, sausage casing, cheese casing, artificial leather, oil recovery booms and socks, and papermaking felts.

Nonwoven cellulose fiber fabric according to exemplary embodiments of the invention is also appropriate for manufacturing products related to leisure and travel. Examples for such an application are sleeping bags, tents, luggage, handbags, shopping bags, airline headrests, CD-protection, pillowcases, and sandwich packaging.

Still another field of application of exemplary embodiment of the invention relates to school and office products. As examples, book covers, mailing envelopes, maps, signs and pennants, towels, and flags shall be mentioned.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Figure 1 illustrates a device for manufacturing nonwoven cellulose fiber fabric which is directly formed from lyocell spinning solution being coagulated by a coagulation fluid according to an exemplary embodiment of the invention.

Figure 2 to Figure 4 show experimentally captured images of nonwoven cellulose fiber fabric according to an exemplary embodiment of the invention in which merging of individual fibers has been accomplished by a specific process control.

Figure 5 and Figure 6 show experimentally captured images of nonwoven cellulose fiber fabric according to an exemplary embodiment of the invention in which swelling of fibers has been accomplished, wherein Figure 5 shows the fiber fabric in a dry non-swollen state and Figure 6 shows the fiber fabric in a humid swollen state.

Figure 7 shows an experimentally captured image of nonwoven cellulose fiber fabric according to an exemplary embodiment of the invention in which formation of two superposed layers of fibers has been accomplished by a specific process implementing two serial bars of nozzles.

Figure 8 shows the general dependency of the capillary force given by capillary height of water as a function of the capillary diameter.

Figure 9 shows a schematic image illustrating a non-isotropic spread of liquid which has been absorbed by a fabric having an anisotropic values for the rate of liquid spread.

Figure 10 shows an experimentally captured image of a single fiber with its internal structure being characterized by a plurality of a fibril structure and thus channels on a submicron scale.

Figure 11 shows an experimentally captured image of a nonwoven cellulose fiber fabric with twists, intra fiber diameter variations, inter fiber diameter variations, in a substantially parallel manner coagulated fibers, and differently sized and shaped cavities.

Figure 12 shows a schematic image of nonwoven cellulose fiber fabric in which different types of merging positions between fibers as well as crossing positions between fibers are shown.

Figure 13 shows a schematic image of a nonwoven cellulose fiber fabric comprising two stacked and merged fiber network layers.

Figure 14 shows how a roundness of a fiber having a cross-section deviating from a circular cross-section can be calculated as the ratio between the inscribed and the circumscribed circles of the cross-section of the fiber according to an exemplary embodiment of the invention.

Figure 15 illustrates a nonwoven cellulose fiber fabric comprising three network layers.

Figure 16 illustrates a part of a device for manufacturing nonwoven cellulose fiber fabric composed of two stacked layers of endless cellulose fiber webs according to an exemplary embodiment of the invention.

Detailed Description of the Drawing

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

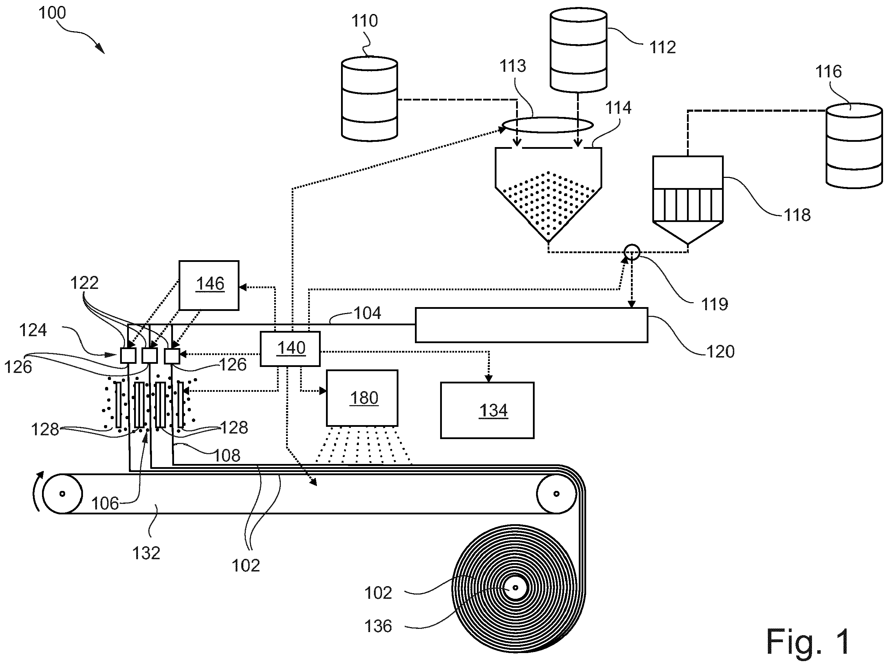

Figure 1 illustrates a device 100 according to an exemplary embodiment of the invention for manufacturing nonwoven cellulose fiber fabric 102 which is directly formed from lyocell spinning solution 104. The latter is at least partly coagulated by a coagulation fluid 106 to be converted into partly-formed cellulose fibers 108. By the device 100, a lyocell solution blowing process according to an exemplary embodiment of the invention may be carried out. In the context of the present application, the term "lyocell solution-blowing process" may particularly encompass processes which can result in essentially endless filaments or fibers 108 of a discrete length or mixtures of endless filaments and fibers of discrete length being obtained. As further described below, nozzles each having an orifice 126 are provided through which cellulose solution or lyocell spinning solution 104 is ejected together with a gas stream or gas flow 146 for manufacturing the nonwoven cellulose fiber fabric 102 according to an exemplary embodiment of the invention.

As can be taken from Figure 1, wood pulp 110, other cellulose-based feedstock or the like may be supplied to a storage tank 114 via a metering unit 113. Water from a water container 112 is also supplied to the storage tank 114 via metering unit 113. Thus, the metering unit 113, under control of a control unit 140 described below in further detail, may define relative amounts of water and wood pulp 110 to be supplied to the storage tank 114. A solvent (such as N-methyl-morpholine, NMMO) accommodated in a solvent container 116 may be concentrated in a concentration unit 118 and may then be mixed with the mixture of water and wood pulp 110 or other cellulose-based feedstock with definable relative amounts in a mixing unit 119. Also the mixing unit 119 can be controlled by the control unit 140. Thereby, the water-wood pulp 110 medium is dissolved in the concentrated solvent in a dissolving unit 120 with adjustable relative amounts, thereby obtaining lyocell spinning solution 104. The aqueous lyocell spinning solution 104 can be a honey-viscous medium composed of (for instance 5 mass % to 15 mass %) cellulose comprising wood pulp 110 and (for instance 85 mass % to 95 mass %) solvent.

The lyocell spinning solution 104 is forwarded to a fiber formation unit 124 (which may be embodied as or which may comprise a number of spinning beams or jets 122). For instance, the number of orifices 126 of the jets 122 may be larger than 50, in particular larger than 100. In one embodiment, all orifices 126 of a fiber formation unit 124 (which may comprise a number of spinnerets of jets 122) of orifices 126 of the jets 122 may have the same size and/or shape. Alternatively, size and/or shape of different orifices 126 of one jet 122 and/or orifices 126 of different jets 122 (which may be arranged serially for forming a multilayer fabric) may be different. The orifices 126 may be arranged as one dimensional alignment of orifices 126.

When the lyocell spinning solution 104 passes through the orifices 126 of the jets 122, it is divided into a plurality of parallel strands of lyocell spinning solution 104. A vertically oriented gas flow, i.e. being oriented substantially parallel to spinning direction, forces the lyocell spinning solution 104 to transform into increasingly long and thin strands which can be adjusted by changing the process conditions under control of control unit 140. The gas flow may accelerate the lyocell spinning solution 104 along at least a part of its way from the orifices 126 to a fiber support unit 132.

While the lyocell spinning solution 104 moves through the jets 122 and further downward, the long and thin strands of the lyocell spinning solution 104 interact with non-solvent coagulation fluid 106. The coagulation fluid 106 is advantageously embodied as a vapor mist, for instance an aqueous mist. Process relevant properties of the coagulation fluid 106 are controlled by one or more coagulation units 128, providing the coagulation fluid 106 with adjustable properties. The coagulation units 128 are controlled, in turn, by control unit 140. Preferably, respective coagulation units 128 are provided between the individual nozzles or orifices 126 for individually adjusting properties of respective layers of fabric 102 being produced. Preferably, each jet 122 may have two assigned coagulation units 128, one from each side. The individual jets 122 can thus be provided with individual portions of lyocell spinning solution 104 which may also be adjusted to have different controllable properties of different layers of manufactured fabric 102.

When interacting with the coagulation fluid 106 (such as water), the solvent concentration of the lyocell spinning solution 104 is reduced, so that the cellulose of the former e.g. wood pulp 110 (or other feedstock) is at least partly coagulated as long and thin cellulose fibers 108 (which may still contain residual solvent and water).

During or after initial formation of the individual cellulose fibers 108 from the extruded lyocell spinning solution 104, the cellulose fibers 108 are deposited on fiber support unit 132, which is here embodied as a conveyor belt with a planar fiber accommodation surface. The cellulose fibers 108 form a nonwoven cellulose fiber fabric 102 (illustrated only schematically in Figure 1). The nonwoven cellulose fiber fabric 102 is composed of continuous and substantially endless filaments or fibers 108.

Although not shown in Figure 1, the solvent of the lyocell spinning solution 104 removed in coagulation by the coagulation unit 128 and in washing in a washing unit 180 can be at least partially recycled.

While being transported along the fiber support unit 132, the nonwoven cellulose fiber fabric 102 can be washed by washing unit 180 supplying wash liquor to remove residual solvent and may then be dried. It can be further processed by an optional but advantageous further processing unit 134. For instance, such a further processing may involve hydro-entanglement, needle punching, impregnation, steam treatment with a pressurized steam, calendering, etc.

The fiber support unit 132 may also transport the nonwoven cellulose fiber fabric 102 to a winder 136 on which the nonwoven cellulose fiber fabric 102 may be collected as a substantially endless sheet. The nonwoven cellulose fiber fabric 102 may then be shipped as roll-good to an entity manufacturing products such as wipes or textiles based on the nonwoven cellulose fiber fabric 102.

As indicated in Figure 1, the described process may be controlled by control unit 140 (such as a processor, part of a processor, or a plurality of processors). The control unit 140 is configured for controlling operation of the various units shown in Figure 1, in particular one or more of the metering unit 113, the mixing unit 119, the fiber formation unit 124, the coagulation unit(s) 128, the further processing unit 134, the dissolution unit 120, the washing unit 118, etc. Thus, the control unit 140 (for instance by executing computer executable program code, and/or by executing control commands defined by a user) may precisely and flexibly define the process parameters according to which the nonwoven cellulose fiber fabric 102 is manufactured. Design parameters in this context are air flow along the orifices 126, properties of the coagulation fluid 106, drive speed of the fiber support unit 132, composition, temperature and/or pressure of the lyocell spinning solution 104, etc. Additional design parameters which may be adjusted for adjusting the properties of the nonwoven cellulose fiber fabric 102 are number and/or mutual distance and/or geometric arrangement of the orifices 126, chemical composition and degree of concentration of the lyocell spinning solution 104, etc. Thereby, the properties of the nonwoven cellulose fiber fabric 102 may be properly adjusted, as described below. Such adjustable properties (see below detailed description) may involve one or more of the following properties: diameter and/or diameter distribution of the fibers 108, amount and/or regions of merging between fibers 108, a purity level of the fibers 108, properties of a multilayer fabric 102, optical properties of the fabric 102, fluid retention and/or fluid release properties of the fabric 102, mechanical stability of the fabric 102, smoothness of a surface of the fabric 102, cross-sectional shape of the fibers 108, etc.

Although not shown, each spinning jet 122 may comprise a polymer solution inlet via which the lyocell spinning solution 104 is supplied to the jet 122. Via an air inlet, a gas flow 146 can be applied to the lyocell spinning solution 104. Starting from an interaction chamber in an interior of the jet 122 and delimited by a jet casing, the lyocell spinning solution 104 moves or is accelerated (by the gas flow 146 pulling the lyocell spinning solution 104 downwardly) downwardly through a respective orifice 126 and is laterally narrowed under the influence of the gas flow 146 so that continuously tapering cellulose filaments or cellulose fibers 108 are formed when the lyocell spinning solution 104 moves downwardly together with the gas flow 146 in the environment of the coagulation fluid 106.

Thus, processes involved in the manufacturing method described by reference to Figure 1 may include that the lyocell spinning solution 104, which may also be denoted as cellulose solution is shaped to form liquid strands or latent filaments, which are drawn by the gas flow 146 and significantly decreased in diameter and increased in length. Partial coagulation of latent filaments or fibers 108 (or preforms thereof) by coagulation fluid 106 prior to or during web formation on the fiber support unit 132 may also be involved. The filaments or fibers 108 are formed into web like fabric 102, washed, dried and may be further processed (see further processing unit 134), as required. The filaments or fibers 108 may for instance be collected, for example on a rotating drum or belt, whereby a web is formed.

As a result of the described manufacturing process and in particular the choice of solvent used, the fibers 108 have a copper content of less than 5 ppm and have a nickel content of less than 2 ppm. This advantageously improves purity of the fabric 102.

The lyocell solution blown web (i.e. the nonwoven cellulose fiber fabric 102) according to exemplary embodiments of the invention preferably exhibits one or more of the following properties:

(i) The dry weight of the web is from 5 to 300 $g/m^2$, preferably 10-80 $g/m^2$

(ii) The thickness of the web according to the standard WSP120.6 respectively DIN29073 (in particular in the latest version as in force at the priority date of the present patent application) is from 0.05 to 10.0 mm, preferably 0.1 to 2.5 mm

(iii) The specific tenacity of the web in MD according to EN29073-3, respectively ISO9073-3 (in particular in the latest version as in force at the priority date of the present patent application) ranges from 0.1 to 3.0 $Nm^2/g$, preferably from 0.4 to 2.3 $Nm^2/g$

(iv) The average elongation of the web according to EN29073-3, respectively ISO9073-3 (in particular in the latest version as in force at the priority date of the present patent application) ranges from 0.5 to 100%, preferably from 4 to 50%.

(v) The MD/CD tenacity ratio of the web is from 1 to 12

(vi) The water retention of the web according to DIN 53814 (in particular in the latest version as in force at the priority date of the present patent application) is from 1 to 250%, preferably 30 to 150%

(vii) The water holding capacity of the web according to DIN 53923 (in particular in the latest version as in force at the priority date of the present patent application) ranges from 90 to 2000%, preferably 400 to 1100%.

(viii) Metal residue levels of copper content of less than 5 ppm and nickel content of less than 2 ppm.

Most preferably, the lyocell solution-blown web exhibits all of said properties (i) to (viii) mentioned above.

As described, the process to produce the nonwoven cellulose fiber fabric 102 preferably comprises:

(a) Extruding a solution comprising cellulose dissolved in NMMO (see reference numeral 104) through the orifices 126 of at least one jet 122, thereby forming filaments of lyocell spinning solution 104

(b) Stretching said filaments of lyocell spinning solution 104 by a gaseous stream (see reference numeral 146)

(c) Contacting said filaments with a vapor mist (see reference numeral 106), preferably containing water, thereby at least partly precipitating said fibers 108.

Consequently, the filaments or fibers 108 are at least partly precipitated before forming web or nonwoven cellulose fiber fabric 102.

(d) Collecting and precipitating said filaments or fibers 108 in order to form a web or nonwoven cellulose fiber fabric 102

(e) Removing solvent in wash line (see washing unit 180)

(f) Optionally bonding via hydro-entanglement, needle punching, etc. (see further processing unit 134)

(g) Drying and roll collection

Constituents of the nonwoven cellulose fiber fabric 102 may be bonded by merging, intermingling, hydrogen bonding, physical bonding such as hydroentanglement or needle punching, and/or chemical bonding.

In order to be further processed, the nonwoven cellulose fiber fabric 102 may be combined with one or more layers of the same and/or other materials, such as (not shown) layers of synthetic polymers, cellulosic fluff pulp, nonwoven webs of cellulose or synthetic polymer fibers, bicomponent fibers, webs of cellulose pulp, such as airlaid or wetlaid pulp, webs or fabrics of high tenacity fibers, hydrophobic materials, high performance fibers (such as temperature resistant materials or flame retardant materials), layers imparting changed mechanical properties to the final products (such as Polypropylene or Polyester layers), biodegradable materials (e.g. films, fibers or webs from Polylactic acid), and/or high bulk materials.

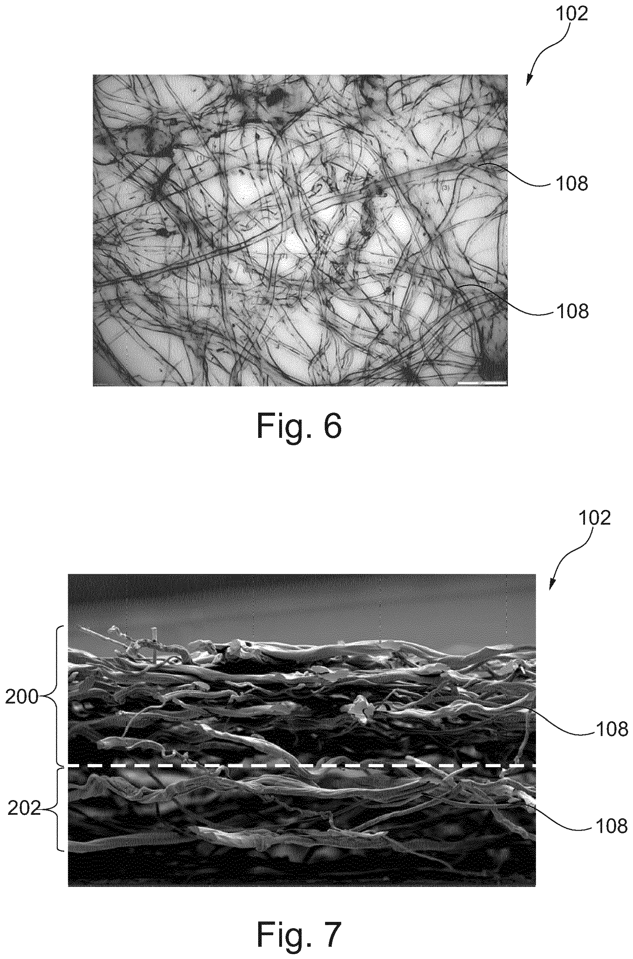

It is also possible to combine several distinguishable layers of nonwoven cellulose fiber fabric 102, see for instance Figure 7.

The nonwoven cellulose fiber fabric 102 may essentially consist of cellulose alone. Alternatively, the nonwoven cellulose fiber fabric 102 may comprise a mixture of cellulose and one or more other fiber materials. The nonwoven cellulose fiber fabric 102, furthermore, may comprise a bicomponent fiber material. The fiber material in the nonwoven cellulose fiber fabric 102 may at least partly comprise a modifying substance. The modifying substance may be selected from, for example, the group consisting of a polymeric resin, an inorganic resin, inorganic pigments, antibacterial products, nanoparticles, lotions, fire-retardant products, absorbency-improving additives, such as superabsorbent resins, ion-exchange resins, carbon compounds such as active carbon, graphite, carbon for electrical conductivity, X-ray contrast substances, luminescent pigments, and dye stuffs.

Concluding, the cellulose nonwoven web or nonwoven cellulose fiber fabric 102 manufactured directly from the lyocell spinning solution 104 allows access to value added web performance which is not possible via staple fiber route. This includes the possibility to form uniform lightweight webs, to manufacture microfiber products, and to manufacture continuous filaments or fibers 108 forming a web. Moreover, compared to webs from staple fibers, several manufacturing procedures are no longer required. Moreover, nonwoven cellulose fiber fabric 102 according to exemplary embodiments of the invention is biodegradable and manufactured from sustainably sourced raw material (i.e. wood pulp 110 or the like). Furthermore, it has advantages in terms of purity and absorbency. Beyond this, it has an adjustable mechanical strength, stiffness and softness. Furthermore, nonwoven cellulose fiber fabric 102 according to exemplary embodiments of the invention may be manufactured with low weight per area (for instance 10 to 30 $g/m^2$). Very fine filaments down to a diameter of not more than 5 $\mu$m, in particular not more than 3 $\mu$m, can be manufactured with this technology. Furthermore, nonwoven cellulose fiber fabric 102 according to an exemplary embodiment of the invention may be formed with a wide range of web aesthetics, for instance in a flat crispy film-like way, in a paper-like way, or in a soft flexible textile-like way. By adapting the process parameters of the described process, it is furthermore possible to precisely adjust stiffness and mechanical rigidity or flexibility and softness of the nonwoven cellulose fiber fabric 102. This can be adjusted for instance by adjusting a number of merging positions, the number of layers, or by after-treatment (such as needle punch, hydro-entanglement and/or calendering). It is in particular possible to manufacture the nonwoven cellulose fiber fabric 102 with a relatively low basis weight of down to 10 $g/m^2$ or lower, to obtain filaments or fibers 108 with a very small diameter (for instance of down to 3 to 5 $\mu$m, or less), etc.

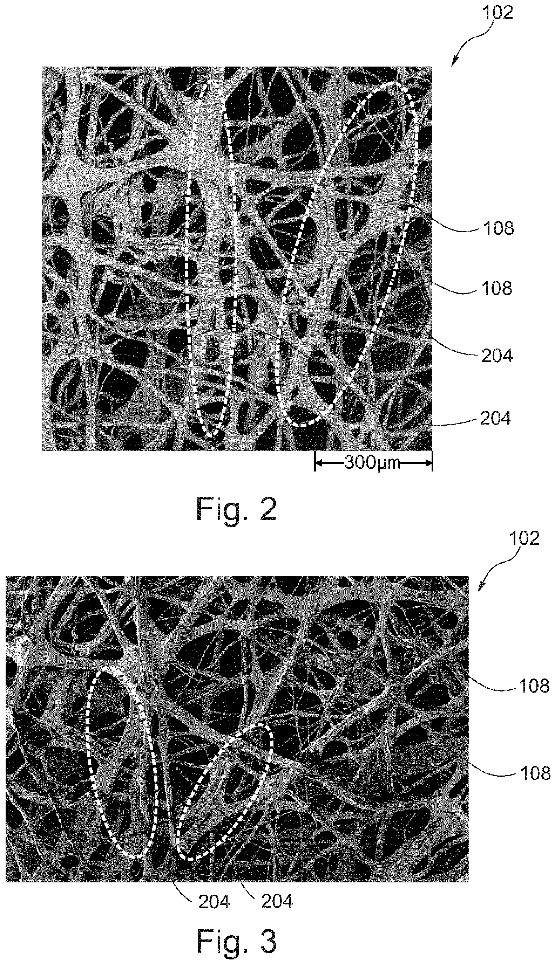

Figure 2, Figure 3 and Figure 4 show experimentally captured images of nonwoven cellulose fiber fabric 102 according to an exemplary embodiment of the invention in which merging of individual fibers 108 has been accomplished by a corresponding process control. The oval markers in Figure 2 to Figure 4 show such merging regions where multiple fibers 108 are integrally connected to one another. At such merging points, two or more fibers 108 may be interconnected to form an integral structure.

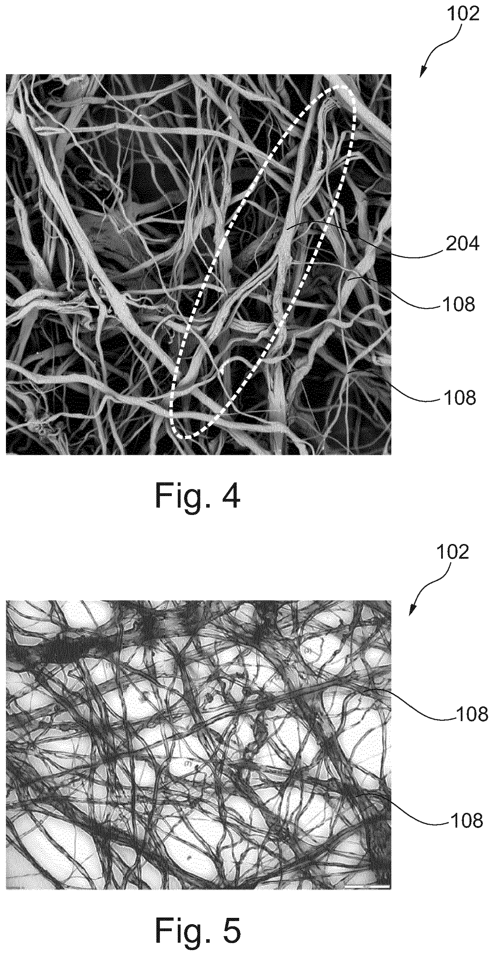

**Figure 5** and **Figure 6** show experimentally captured images of nonwoven cellulose fiber fabric 102 according to an exemplary embodiment of the invention in which swelling of fibers 108 has been accomplished, wherein Figure 5 shows the fiber fabric 102 in a dry non-swollen state and Figure 6 shows the fiber fabric 102 in a humid swollen state. The pore diameters can be measured in both states of Figure 5 and Figure 6 and can be compared to one another. When calculating an average value of 30 measurements, a decrease of the pore size by swelling of the fibers 108 in an aqueous medium up to 47% of their initial diameter could be determined.

**Figure 7** shows an experimentally captured image of nonwoven cellulose fiber fabric 102 according to an exemplary embodiment of the invention in which formation of two superposed layers 200, 202 of fibers 108 has been accomplished by a corresponding process design, i.e. a serial arrangement of multiple spinnerets. The two separate, but connected layers 200, 202 are indicated by a horizontal line in Figure 7. For instance, an n-layer fabric 102 (n≥2) can be manufactured by serially arranging n spinnerets or jets 122 along the machine direction.

Specific exemplary embodiments of the invention will be described in the following in more detail:

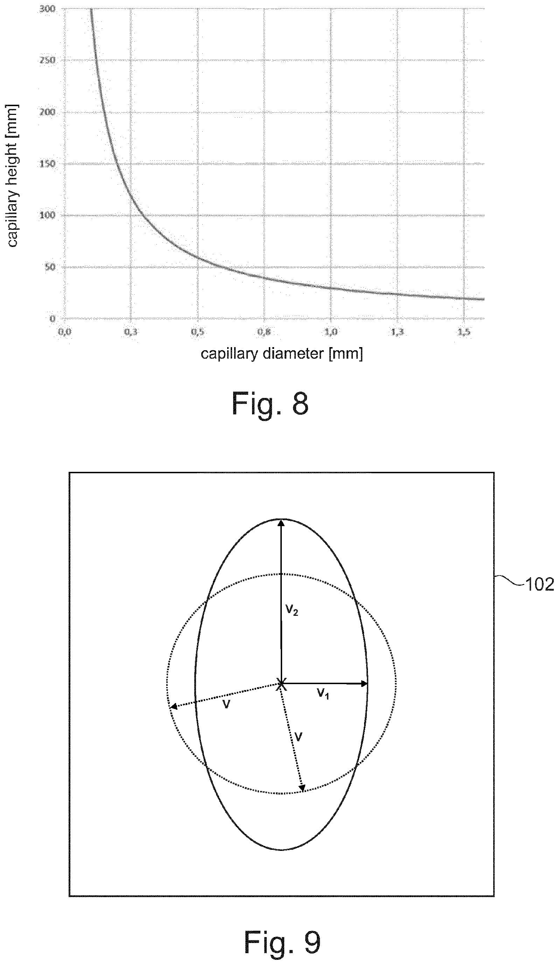

**Figure 8** illustrates the general dependency of the capillary force given by the capillary height of water as a function of the capillary diameter in accordance with the known Washburn equation which describes the capillary flow in a bundle of parallel cylindrical tubes. The Washburn equation reads:

$$L^2 = \frac{\gamma D t}{4\eta}$$

$$(1)$$

Thereby, t is the time for a liquid having a dynamic viscosity $\eta$ (eta) and a surface tension $\gamma$ (gamma) to penetrate a distance L into the tubes having a diameter D. Although it has been discussed in science that the Washburn equation (1) also applies at least approximately for capillary effects in porous materials, it was the inventor who found out that the Washburn equation (1) also applies at least approximately for nonwoven cellulose fiber fabrics. Thereby, the diameter is D is given by the average spatial extension of the voids formed in between the fibers.

The graph depicted in Figure 8 illustrates the results of a capillary experiment with a plurality of tubes extending in vertical direction, i.e. parallel to the direction of gravity, into which a test liquid is absorbed in response to capillary forces. The capillary force is direct proportional to the capillary height which is achieved within a certain amount of time t.

In case of nonwoven cellulose fiber fabrics absorbing the test liquid water in a good approximation the dynamic viscosity η, which is associated with the surface tension of water, can be considered as to be a constant value. Due to the presence respectively the "offer" of a plurality of differently sized voids or cavities within the fabric, some voids yield a large wicking speed whereas other voids yield a smaller wicking speed. However, throughout the bulk material of the nonwoven cellulose fiber fabric these different wicking speeds take the mean. In this context it should be understood that the average size of the voids within a nonwoven cellulose fiber fabric is an important parameter for the wicking speed. Therefore, by choosing appropriate process parameters for the process of lyocell spinning the average size of the voids and the wicking speed of the respective nonwoven cellulose fiber fabric can be adjusted.

It is pointed out that with regard to the wicking speed the transport velocity of the conveyor belt-type fiber support unit (see reference numeral 132 in Figure 1) is an imported parameter. By controlling this parameter an appropriate wicking speed can be obtained. Without being bound to a specific theory, it is presently believed that with increasing transport velocity the laydown of the coagulated fibers on the conveyor belt-type fiber support unit there will be "narrowed" a distribution of the orientation of the fibers on the support unit towards the movement direction of the support unit. When taking into account that the preferred direction of wicking is along the length direction of a cellulose fiber, not only the general wicking speed can be controlled by adjusting the velocity of the support unit but also different wicking speeds along different directions within the fabric can be achieved. With respect to different wicking speeds an anisotropy of 1:2, 1:5, or even 1:10 may be achieved.

An anisotropic behavior of the wicking speed may be employed in a beneficial manner for instance for diapers or napkins. In this context a diaper may be seen as an at least rectangular but not square fabric. The anisotropic behavior can then be adjusted, in particular by adjusting the velocity of the conveyor belt-type fiber support unit, in such a manner that it corresponds to the ratio of the side lengths of the fabric. In this context it should be clear that the larger wicking speed is associated with the longer side length. This may provide the advantage that the entire area of the fabric will be exploited for (a fast) water absorption.

It is mentioned that in the above presented physical pictures the same considerations apply also for the rate of liquid spread.

**Figure 9** shows a schematic image illustrating a non-isotropic spread of liquid which has been absorbed by a fabric having an anisotropic values for the rate of liquid spread. The illustration corresponds to an experiment wherein colored liquid to be absorbed is deposited on a fabric 102 at a position denoted with "X". The propagation of the deposited liquid within the fabric as a function of time is observed. At a predetermined time after start of the liquid deposition an image of the liquid spread is captured by means of a camera. Further details regarding such a measurement procedure have already been elucidated above.

The dashed circle represents the edge of a liquid spread (as seen on the surface of the fabric 102), which occurs within a fabric 102 having an isotropic behavior with regard to liquid spread and/or wicking speed. Thereby, the speed of propagation v of the liquid is the same for all directions within the plane of the fabric. This is illustrated in Figure 9 by means of the two dashed arrows having the same length v.

The oval depicted with a full line is an example for an anisotropic behavior with regard to liquid spread and/or wicking speed. Thereby, the speed of propagation of the liquid is different for different directions within the plane of the fabric 102. This is illustrated in Figure 9 by means of the two arrows depicted with full lines. Specifically, the longer extension of the oval corresponds to a faster speed of propagation v2 whereas the shorter extension of the oval corresponds to a slower speed of propagation v1.

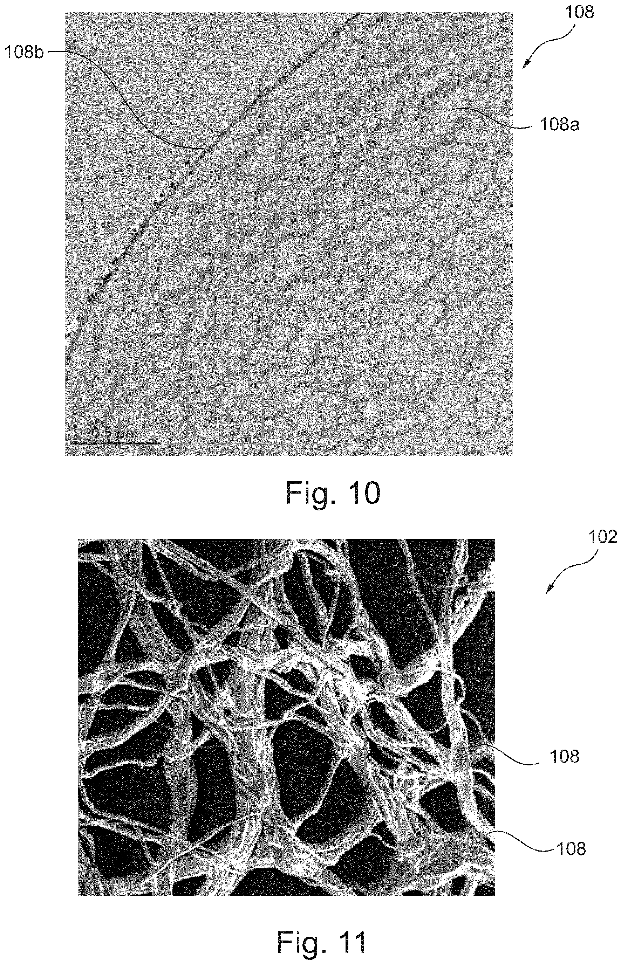

**Figure 10** shows an experimentally captured image of a single fiber 108 and its internal structure. The curved line 108b is the shell of the fiber 108. The internal structure of the fiber comprises a plurality of fibrils 108a. Due to the presence of the fibrils 108a also the internal structure of the fiber 108 can be considered as to represent a fibril structure with channels in submicron scale which may provide a significant contribution to the liquid absorbing capability.

Experimental studies have revealed that surprisingly the described (submicron) fibril structure is a feature which is in particular pronounced in endless fibers which have been produced by means of a lyocell spinning procedure. Specifically, a high homogeneity of the fibril structure within the fiber 108 can be achieved. It has further turned out that a laminar gas flow for the fiber coagulation process at a position, at which the fiber coagulation has just been taken place, promotes the formation of the fibril structures, which are in particular suitable for accommodating liquid.

At this point it is mentioned that a liquid absorption within the inner structure of the fibers goes along with a swelling process of the fibers. Compared with thermoplastic materials a carefully produced lyocell fiber exhibits within its interior a comparatively homogeneous capillary system of the fibrils, which system extends along the fiber. This capillary system swells upon liquid absorption. As will be described below in more detail, this swelling yields a significant increase for the parameter values for the rate of liquid spread and/or the wicking speed.

**Figure 11** shows an experimentally captured image of a nonwoven cellulose fiber fabric 102 according to an embodiment of the invention. It shows that the fiber network includes fibers 108 being characterized by different variations of diameter/titer and/or shape. This involves twists, intra fiber diameter variations, inter fiber diameter variations, in a substantially parallel manner coagulated fibers 108, and differently sized and shaped cavities. By variation of average fiber diameters, merging and twisting of fibers the capillary properties of the resulting fabric and thus the wicking speed and the liquid spreading rate can be controlled.

It is mentioned that the mixture of thinner and thicker fibers may provide several welcome properties of the fabric 102. For instance thin fibers may yield a high capillarity between neighboring fibers which improves liquid absorbing capability in particular with regard to wicking speed and rate of liquid spread. Thicker fibers may contribute to a high mechanical stability of the three dimensional fiber fabric structure. Such an increased stability may be necessary if so called micro pores, which have been developed within the fiber network, do not collapse in particular because of adhesion forces between different fibers. In this context it should be clear that the collapse of such micro pores would decrease the liquid absorbing capability. Of course, any cavity, chamber, void, gap, or pore provides, due it's capillary forces, a more or less strong contribution to the liquid absorbing capability of the fabric 102.

Twists may be given by at least two individual fibers which in a spiral manner are twisted around each other. Further, also a single fiber 108 which has a non-circular cross section and which is twisted (with itself) may be considered as to represent such a twist.

In the lyocell spinning procedure the average fiber diameter respectively the fiber titer can be adjusted for instance by varying the size of the orifice through which the respective lyocell fiber is extruded. Also a variation of a gas flow (see reference numeral 146 in Figure 1) pulling the not yet coagulated fibers towards the (conveyor belt-type) fiber support unit 132 (see reference numeral 12 in Figure 1) may be used for forming intra diameter and/or inter diameter variations of fibers 108.

A variation along the length of the fiber may be generated for instance by means of pressure and/or velocity variations of the gas flow which accelerates the extruded lyocell spinning solution towards the conveyor type fiber support unit (see reference numeral 132 in Figure 1).

With these measures cellulose fibers having a diameter of less than 5 $\mu$m (=5 x 10-6 m) can be incorporated within a fabric having higher diameter fibers in particular for mechanical stabilization. This mechanical stabilizing function may prevent that under the load of the own weight of the fabric and/or in the presence of externals loads, e.g. when being sucked by means of a negative pressure at the surface of the (conveyor belt-type) fiber support unit (see reference numeral 132 in Figure 1), the capillary structure of the fabric collapses at least partially.

In this document there are described several controllable process parameters for adapting in a predictable manner the capillarity dimension of the fiber network of the described fabric. In this context it is mentioned that the mechanism of absorbing water in particular with regard to wicking speed and/or rate of liquid spread strongly depends on the geometry and on the spatial dimensions of the capillary system. At the beginning of a water absorption process the capillary wicking speed and/or the capillary rate of liquid spread strongly depends on the diameter and/or on the capillary radii of the more or less fine capillary structures.

With regard to the reachable parameter values for the rate of liquid spread and/or for the wicking speed even more important might be the matter of fact that the fabric described in this document comprise substantially endless fibers. At least compared to known fabrics made from staple fibers the fabrics described in this document are made from fibers which are continuous. Therefore, within the described fabric the number of fiber ends is significantly smaller. This means that within the described fabric also the number of gaps extending between different fibers or fiber ends is significantly smaller. In this context every gap causes a certain barrier for liquid "travelling" within the fabric. As a consequence, the endless fibers contribute to a significant increase of the liquid surface spread and/or the wicking speed.

Further, by contrast to polymer endless fibers the cellulose endless fibers exhibit a swelling upon liquid absorption. Such a swelling has an effect on submicron channels (see Figure 10) which promote the capability of the fabric with regard to liquid spreading and wicking. Furthermore, also the merging points consist of material which swells upon absorption of liquid. Therefore, also the merging points promote liquid spreading and wicking. As a consequence, adapting the merging factor may also be used as a measure for tailoring the rate of liquid spread and/or the wicking speed towards desired values.

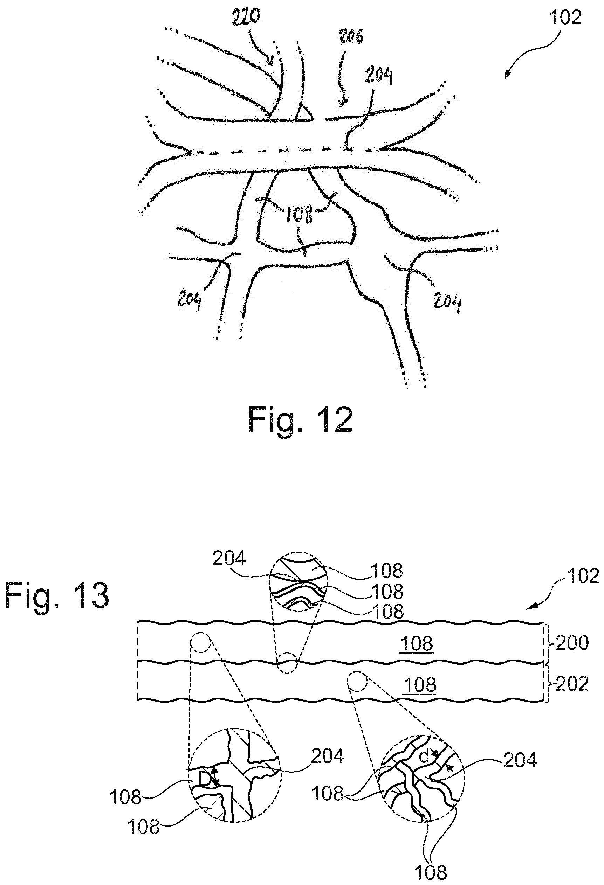

**Figure 12** shows a schematic image of nonwoven cellulose fiber fabric 102 according to an exemplary embodiment of the invention in which on the one hand different types of merging positions 204 between fibers 108 and on the other hand non-merged crossing positions 220 between fibers 108 are shown.

The plurality of merging positions 204 include a merging point, wherein at least two different fibers intersect with each other, and a merging line along which different fibers 108 are mutually aligned side-by-side over a portion of their length in order to form a superordinate fiber structure 206 with a diameter increase along the entire merging line. While the fibers 108 are integrally connected at the merging positions 204 and can be separated here only by destroying the fiber network, other fibers 108 are only in frictional contact with one another at crossing positions 220 and can be freely moved here relatively to one another. Although merging and crossing between respectively two fibers 108 is illustrated in Figure 12, merging and/or crossing can also occur between respectively at least three fibers 108.

Without being bound to a specific theory it is presently believe that no or only a poor merging at a non-merged or only at a poor merged crossing position exhibits a barrier with regard to liquid travelling from one fiber to the other fiber. In case of a strong merging between at least two fibers (see e.g. reference numerals 204 in Figure 12) a liquid transfer between the involved fibers is much easier and in particular much faster. Even in case of an unfavorable spatial course of the fibers within the fabric, all fibers can accommodate liquid particles such that they swell and provide a contribution to liquid absorbing capability.

**Figure 13** shows a schematic cross sectional view of a nonwoven cellulose fiber fabric 102 which, in accordance with an exemplary embodiment of the invention, comprises two stacked and merged network layers of interconnected fibers 108.

A first network layer comprising first fibers 108 is denominated with reference numeral 200. The second network layer comprising second fibers 108 is denominated with reference numeral 202. Due to different processing parameter (values) the first fibers 108 differ from the second fibers 108 in at least one physical and/or chemical property.

According to the exemplary embodiment described here the (average) diameter of the first fibers 108 is larger than the (average) diameter of the second fibers 108. This is indicated by the lower two details of Figure 12. An important property of the interface between the layers 200, 202 is shown in the upper detail of Figure 12, where an intra-layer merging point 204 is visible which integrally couples fibers 108 of both layers 200, 202 at the interface for increasing stability of the fabric 102 at the interface. Additionally, different ones of the fibers 108 being located in the different layers 200, 202 are integrally connected at at least one respective inner-layer merging position 204 (see again the two lower details of Figure 13).

Fibers 108 being located in the different fiber network layers 200, 202 and being formed with different average diameter may be provided with different functionalities. Such different functionalities may be supported by the different average diameters, but may also be further promoted by a respective coating or the like. Such different functionalities may be for instance a different behavior in terms of wicking, anisotropic behavior, different oil absorbing capability, different water absorbing capability, different cleanability, and/or different roughness.

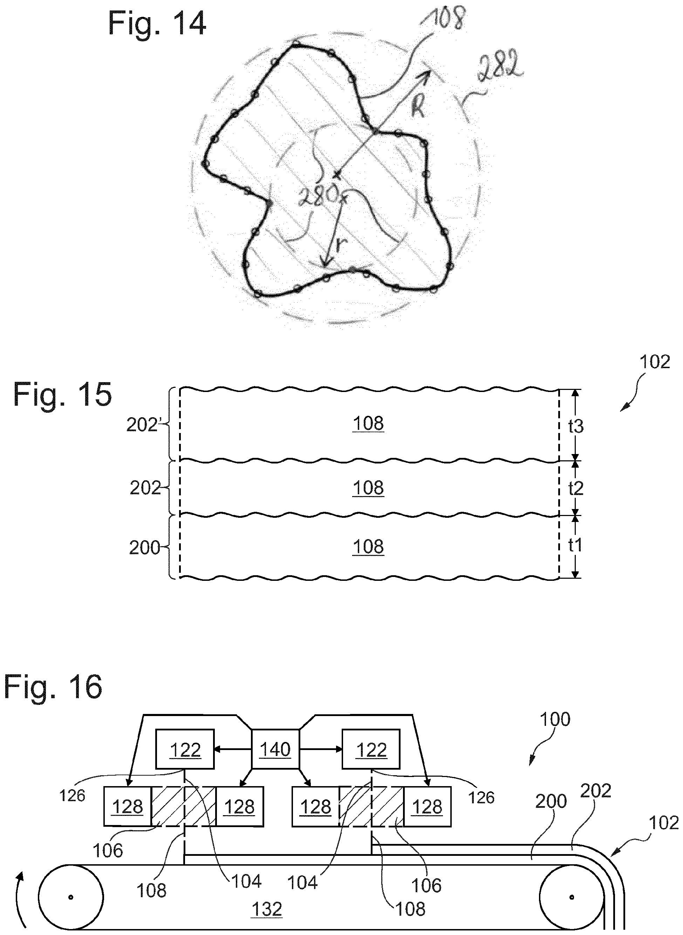

**Figure 14** shows how a roundness of fibers 108 having a cross-section deviating from a circular cross-section can be calculated as the ratio between an inscribed circle 280 and a circumscribed circle 282 of the cross-section of the fiber 108 according to an exemplary embodiment of the invention.

With this definition the minimum circumscribed circle 282 is defined as the smallest circle which encloses the entirety of the roundness profile of the cross-section of the fiber 108 illustrated in Figure 14. The maximum inscribed circle 280 is defined as the largest circle that can be inscribed inside the roundness profile of the cross-section of the fiber 108 as illustrated in Figure 14. In the context of this document, roundness can be defined as a ratio between a radius r of the inscribed circle 280 divided by a radius R of the circumscribed surface 282. Roundness may be indicated by a resulting percentage value. In the present example, $R \approx 2r$ and the roundness of the fiber 108 is therefore approximately 50%. For comparison, a circular cylindrical fiber 108 fulfills the condition $R = r$ and has a roundness of one.

The bending of the outer shell of the cellulose fiber within the drawing plane, i.e. at least substantially perpendicular to the longitudinal extension of the fiber, also contributes to a formation of (small cavities) which may have an impact on the overall capillary forces and accommodate liquid particles of water based and/or oil based liquids. As a consequence, also a deviation from a circular cross section may help the fabric to exhibit a large liquid absorbing capability.

Given a certain cross section of the fiber the outer fiber surface increases with decreasing roundness respectively with increasing deviation from a circular cross section. Therefore, it should be clear that the roundness is also an important parameter which has an effect on capillary (surface) strength and, as a consequence, also on the liquid absorbing capability of the fabric 102, in particular with regard to wicking speed and/or rate of liquid spread.

The cross sectional shape of the fibers 108 may be adjusted for instance by the corresponding cross sectional shape of the orifice (denoted with reference numeral 126 in Figure 1) through which the respective portion of the lyocell spinning solution is extruded. However, also other structural dimensions of the respective orifice may have an influence on the cross sectional shape of the resulting fiber 108. Specifically, the portion of the cross sectional shape with the smallest bending radius, i.e. where in the left part of Figure 14 the surface of the fiber 108 coincides with the inscribed circle 280, may be seen as at least a part of a capillary channel which has been formed by a cross sectional shape conditioning.

**Figure 15** illustrates in accordance with an embodiment of the invention a nonwoven cellulose fiber fabric 102 comprising three network layers. A first (lower) fiber network layer is denominated with reference numeral 200. A second (middle) fiber network layer, which is formed on top of the first fiber network layer 200, is denominated with reference numeral 202. A further (upper) fiber network layer, which is formed on top of the second fiber network layer 202, is denominated with reference numeral 202'. As has already been mentioned above, the fabric 102 may comprise more than three stacked fiber network layers.

As can be further seen from Figure 15, according to the exemplary embodiment described here the three fiber network layers 200, 202, 202' have different thicknesses. The first fiber network layer 200 has a first thickness t1. The second fiber network layer 202 has a second thickness t2. The further fiber network layer 202' has a third thickness t3.

As has already been described above, each layer may be associated respectively may comprise an individual functionality. Different functionalities may be caused by a variety of different fiber network characteristics, e.g. in particular the (average) fiber diameter and/or the merging factor of the respective layer. Further, with an appropriate inter-layer merging there is no need for any additional adhesion material for a mutual attachment of neighboring layers. Therefore, the described fabric can be realized in an environmentally compatible manner. Specifically, the described multilayer fabric can be used for a completely biodegradable product.

A multilayer fabric as schematically depicted in Figure 15 may be specifically adapted for applications requiring certain haptic characteristics. Suitable specific basic properties of a fibrous web made from the described fabric can be tailored towards the specific application. Such a specific basic property may be for instance a specific liquid absorbing and/or releasing management combined with a soft haptic characteristic of a cover layer of the fabric. In particular, an appropriate design parameter of fiber diameter variations may allow to produce a desired combination of softness, mechanical stability, liquid absorbing capability, wicking (speed), etc.

Specifically, a multilayer fabric in accordance with exemplary embodiments of the invention may comprise at least one inner or middle layer having a large liquid absorbing and/or liquid retaining capability. This inner or middle layer may be soaked with a liquid which during application of the respective fiber fabric product, e.g. a facial mask, a cleaning cloth, etc., is supposed to be released. At least one of the cover layers is configured such that a uniform (over time and/or space) liquid dispensing is provided. Such a design of a multilayer fabric may be achieved for instance by means of appropriate fiber diameter variations within the entire fabric.

**Figure 16** illustrates a part of a device 100 for manufacturing nonwoven cellulose fiber fabric 102 composed of two stacked layers 200, 202 of endless cellulose fibers 108 according to an exemplary embodiment of the invention. A difference between the device 100 shown in Figure 16 and the device 100 shown in Figure 1 is that the device 100 according to Figure 16 comprises two serially aligned jets 122 and respectively assigned coagulation units 128, as described above. In the embodiment described here, two coagulation units 128 are assigned to each one of the jets 122. In Figure 12, one coagulation unit 128 is located on the left side of the path of the lyocell spinning solution 104 extending between the jet 122 and the fiber support unit 132 and the other coagulation unit 128 is located on the respective right side of this path. In view of the movable fiber accommodation surface of the conveyor belt-type fiber support unit 132, the upstream jet 122 on the left-hand side of Figure 16 produces layer 200. Layer 202 is produced by the downstream jet 122 (see right hand side of Figure 16) and is attached to an upper main surface of the previously formed layer 202 so that a double layer 200, 202 of the fabric 102 is obtained.

According to Figure 16, the control unit 140 (controlling the jets 122 and all the coagulation units 128) is configured for adjusting process parameters so that the fibers 108 of the different layers 200, 202 differ concerning fiber diameter by more than 50% in relation to a smallest diameter. Adjusting the fiber diameters of the fibers 108 of the layers 200, 202 by the control unit 140 may comprise adjusting an amount of coagulation fluid 106 interacting with the lyocell spinning solution 104. Additionally, the embodiment of Figure 16 adjusts the process parameters for adjusting fiber diameter by serially arranging multiple jets 122 of orifices 126 (optionally with different properties) along the movable fiber support unit 132. For instance, such different properties may be different orifice 126 diameters, different speed of gas flow 146, different amounts of gas flow 146, and/or different gas flow 146 pressure. Although not shown in Figure 16, it is possible to further process the fibers 108 after collection on the fiber support unit 132 e.g.by hydro-entanglement, needle punching, impregnation, steam treatment with a pressurized steam, and/or calendering.

Still referring to the embodiment illustrated in Figure 16, one or more further nozzle bars or jets 122 may be provided and may be arranged serially along a transport direction of the fiber support unit 132. The multiple jets 122 may be arranged so that a further layer 202 of fibers 108 may be deposited on top of the previously formed layer 200, preferably before the coagulation or curing process of the fibers 108 of the layer 200 and/or of the layer 202 is fully completed, which may trigger merging. When properly adjusting the process parameters, this may have advantageous effects in terms of the properties of a multilayer fabric 102:

Without wishing to be bound to a specific theory, it is presently believed that the second layer 202 can be considered as a reinforcement of the first layer 200, which increases the homogeneity of the resulting fabric 102. This increase of the mechanical stability can be further improved by fiber diameter variation (in particular *inter-fiber* diameter variation and/or *intra-fiber* longitudinal diameter variation of the individual fibers 108). When exerting deeper (in particular punctual) pressure (for instance provided by air or water), the cross-sectional shape of a fiber 108 can be further intentionally distorted, which may advantageously result in a further increased mechanical stability.

On the other hand, intended merging between fibers 108 of the fabric 102 according to Figure 16 can be triggered so as to further increase the mechanical stability of the fabric.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

List of reference signs:

| | |
|---|---|
| 100 | device for manufacturing nonwoven cellulose fiber fabric |
| 102 | nonwoven cellulose fiber fabric / web like fabric |
| 104 | lyocell spinning solution |
| 106 | coagulation fluid |
| 108 | fibers |
| 108a | fibril |
| 108b | fiber shell |
| 110 | wood pulp |
| 112 | water container |
| 113 | metering unit |
| 114 | storage tank |
| 116 | solvent container |
| 118 | washing unit |
| 119 | mixing unit |
| 120 | dissolving unit |
| 122 | jet |
| 124 | fiber formation unit |
| 126 | orifices |
| 128 | coagulation unit |
| 132 | (conveyor belt-type) fiber support unit |
| 134 | further processing unit |
| 136 | roll |
| 140 | control unit |
| 146 | gas flow |
| | |
| 200 | merged layer / first network layer |
| 202 | merged layer / second network layer |
| 202' | merged layer / further network layer |
| 204 | intra-layer merging position / intra-layer merging point / intra-layer merging line |
| 206 | superordinate fiber structure |
| 220 | non-merged crossing positions |
| 280 | inscribed circle |
| 282 | circumscribed circle |
| | |
| r, R | radius of inscribed circle respectively circumscribed circle |
| t1, t2, t3 | layer thicknesses |

**Claims**

1. A nonwoven cellulose fiber fabric (102), in particular directly manufactured from a lyocell spinning solution (104), the fabric (102) comprising

   a network of substantially endless fibers (108), wherein

   the fabric (102) exhibits a water absorbing capability with
   a rate of liquid spread of at least 3000 $mm^2$ within 5 minutes.

2. The fabric (102) as set forth in the preceding claim, wherein
   the rate of liquid spread within 5 minutes is at least 4000 $mm^2$, in particular 5000 $mm^2$, and further in particular 5500 $mm^2$.

3. The fabric (102) as set forth in any one of the preceding claims 1 and 2, wherein
   along a first direction within the fabric (102) the rate of liquid spread has a first value and

along a second direction within the fabric (102) the rate of liquid spread has a second value, the second direction being perpendicular to the first direction value, wherein

the first value and the second value differ from each other by less than 20%, in particular by less than 10% or the first value and the second value differ from each other by more than 20%, in particular by more than 30% and further in particular by more than 40%.

4. A nonwoven cellulose fiber fabric (102), in particular directly manufactured from a lyocell spinning solution (104), the fabric (102) comprising

a network of substantially endless fibers (108), wherein

the fabric (102) exhibits a water absorbing capability with a wicking speed of at least 0.25 gram water per 1 gram fabric and 1 second.

5. The fabric (102) as set forth in the preceding claim, wherein
the wicking speed is at least 0.30 gram water per 1 gram fabric and 1 second, in particular at least 0.35 gram water per 1 gram fabric and 1 second, and further in particular at least 0.40 gram water per 1 gram fabric and 1 second.

6. The fabric (102) as set forth in any one of the preceding claims, wherein
at least a part of the fibers (108) are integrally merged at merging positions (204), wherein in particular a merging factor of the fibers (108) is in a range between 0.2% and 100%, in particular in a range between 0,5% and 15%.

7. The fabric (102) as set forth in any one of the preceding claims, wherein different ones of the fibers (108) are located at least partially in different distinguishable layers (200, 202), wherein in particular
the fabric comprises at least one of the following features:

fibers (108) of different layers (200, 202) are integrally connected at at least one inter-layer merging position (204) between the layers (200, 202);
different ones of the fibers (108) being located at least partially in different layers (200, 202) differ concerning fiber diameter, in particular differ concerning an averaged fiber diameter;
fibers (108) of different layers (200, 202) have the same fiber diameter, in particular have substantially the same averaged fiber diameter;
fibers (108) networks of different layers (200, 202) provide different functionality, wherein the different functionality in particular comprises at least one of the group consisting of different wicking, different anisotropic behavior, different liquid absorbing capability, different cleanability, different optical properties, different roughness, different smoothness, and different mechanical properties.

8. The fabric (102) as set forth in any one of the preceding claims, wherein
the fiber network comprises at least one of the following features:

within one and the same fiber (108) different fiber sections differ concerning fiber diameter by more than 50% in relation to the smallest diameter of this fiber (108);
different fibers (108) differ concerning fiber diameter by more than 50% in relation to the smallest diameter of one of the fibers (108).

9. The fabric (102) as set forth in any one of the preceding claims, wherein
the fiber network comprises at least one of the following features:

at least 3%, in particular at least 5%, of the fibers (108) have a non-circular cross sectional shape having a roundness of not more than 90%;
at least 1%, in particular at least 3%, of the fibers (108) have a non-circular cross sectional shape having a roundness of not more than 80%, in particular of not more than 70%.

10. The fabric (102) as set forth in any one of the preceding claims, wherein the fibers (108) have a copper content of less than 5 ppm and/or have a nickel content of less than 2 ppm.

11. A method of manufacturing nonwoven cellulose fiber fabric (102), in particular a fabric (102) as set forth in any one of the preceding claims, directly from a lyocell spinning solution (104), the method comprising

extruding the lyocell spinning solution (104) through a jet (122) with orifices (126) supported by a gas flow (146) into a coagulation fluid (106) atmosphere to thereby form substantially endless fibers (108);
collecting the fibers (108) on a fiber support unit (132) to thereby form the fabric (102); and
adjusting process parameters of the manufacturing process so that the fabric (102) exhibits a rate of liquid spread of at least 3000 mm$^2$ within 5 minutes or

the fabric (102) exhibits a water absorbing capability with a wicking speed of at least 0.25 gram water per 1 gram fabric and 1 second.

12. A device (100) for manufacturing nonwoven cellulose fiber fabric (102) directly from a lyocell spinning solution (104), in particular for manufacturing a fabric as set forth in any one of the preceding claims 1 to 10, the device (100) comprising

a jet (122) with orifices (126) configured for extruding the lyocell spinning solution (104) supported by a gas flow (146);
a coagulation unit (128) configured for providing a coagulation fluid (106) atmosphere for the extruded lyocell spinning solution (104) to thereby form substantially endless fibers (108);
a fiber support unit (132) configured for collecting the fibers (108) to thereby form the fabric (102); and
a control unit (140) configured for adjusting process parameters so that the fabric (102) exhibits a rate of liquid spread of at least 3000 mm$^2$ within 5 minutes or

the fabric (102) exhibits a water absorbing capability with a wicking speed of at least 0.25 gram water per 1 gram fabric and 1 second.

13. A method of using a nonwoven cellulose fiber fabric (102) according to any of claims 1 to 10 for at least one of the group consisting of a wipe, a household sheet, a filter, a hygiene product, a medical application product, a geotextile, agrotextile, clothing, a product for building technology, an automotive product, a furnishing, an industrial product, a product related to leisure, beauty, sports or travel, and a product related to school or office.

14. A product or composite comprising a nonwoven cellulose fiber fabric as set forth in any one of the preceding claims 1 to 10.

Fig. 1

EP 3 385 433 A1

102

108

108

204

204

├─300µm─┤

Fig. 2

102

108

108

204   204

Fig. 3

102

204

108

108

## Fig. 4

102

108

108

## Fig. 5

Fig. 6

Fig. 7

Fig. 8

Fig. 9

Fig. 10

Fig. 11

Fig. 12

Fig. 13

## Fig. 14

## Fig. 15

## Fig. 16

Europäisches
Patentamt

European
Patent Office

Office européen
des brevets

# EUROPEAN SEARCH REPORT

Application Number

EP 17 16 4623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 6 197 230 B1 (PIERRE MICHEL [FR] ET AL) 6 March 2001 (2001-03-06) * column 8, line 43 - column 9, line 45; figure 3; example 2e * * page 5, line 60 - line 65 * * column 6, line 29 - line 45 * * column 6, line 60 - line 62 * ----- | 1-6,8-14 | INV. D04H3/013 B32B5/26 D04H3/08 |
| X | GB 2 337 957 A (COURTAULDS FIBRES [GB]; ACORDIS FIBRES [GB]) 8 December 1999 (1999-12-08) * page 2, line 27 * * page 2, line 1 - line 19 * * page 3, line 18 - line 20 * * page 4, line 14 - page 5, line 25 * ----- | 1-6,8-14 | |
| X | HAYHURST M J: "SPUNBOND CELLULOSE", CHEMICAL FIBERS INTERNATIONAL,, vol. 56, no. 6, 1 June 2006 (2006-06-01), pages 386, 388-390, 393, XP001503726, ISSN: 0340-3343 * Medium bond sample C; figures 8-9 * ----- | 1-6, 8-10,13, 14 | |
| X,D | WO 2007/124521 A1 (CHEMIEFASER LENZING AG [AT]; WHITE PAT [GB]; HARMS HAIO [AT]; HAYHURST) 8 November 2007 (2007-11-08) * page 2, line 10 - line 19 * * page 2, line 26 - line 33 * * page 3, line 6 * * page 6, line 8 - line 12 * * page 8 - page 9 * ----- | 1-10,13, 14 | |

TECHNICAL FIELDS
SEARCHED (IPC)

D04H
B32B

The present search report has been drawn up for all claims

| Place of search | Date of completion of the search | Examiner |
|---|---|---|
| Munich | 11 September 2017 | Beckert, Audrey |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 16 4623

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2017

| Patent document cited in search report | | | Publication date | Patent family member(s) | | | Publication date |
|---|---|---|---|---|---|---|---|
| US 6197230 | | B1 | 06-03-2001 | AT | 221585 | T | 15-08-2002 |
| | | | | AU | 6461596 | A | 30-01-1997 |
| | | | | DE | 69622727 | D1 | 05-09-2002 |
| | | | | DE | 69622727 | T2 | 23-10-2003 |
| | | | | EP | 0847456 | A1 | 17-06-1998 |
| | | | | ES | 2183002 | T3 | 16-03-2003 |
| | | | | FR | 2735794 | A1 | 27-12-1996 |
| | | | | JP | 3933201 | B2 | 20-06-2007 |
| | | | | JP | H11508332 | A | 21-07-1999 |
| | | | | JP | 2007070797 | A | 22-03-2007 |
| | | | | US | 6197230 | B1 | 06-03-2001 |
| | | | | WO | 9701660 | A1 | 16-01-1997 |
| GB 2337957 | | A | 08-12-1999 | AT | 251239 | T | 15-10-2003 |
| | | | | AU | 4158299 | A | 30-12-1999 |
| | | | | BR | 9910862 | A | 06-03-2001 |
| | | | | CA | 2333882 | A1 | 16-12-1999 |
| | | | | CN | 1304464 | A | 18-07-2001 |
| | | | | DE | 69911776 | D1 | 06-11-2003 |
| | | | | DE | 69911776 | T2 | 19-08-2004 |
| | | | | EP | 1093536 | A1 | 25-04-2001 |
| | | | | ES | 2209444 | T3 | 16-06-2004 |
| | | | | GB | 2337957 | A | 08-12-1999 |
| | | | | ID | 27038 | A | 22-02-2001 |
| | | | | JP | 4373008 | B2 | 25-11-2009 |
| | | | | JP | 2002517630 | A | 18-06-2002 |
| | | | | TR | 200003602 | T2 | 20-04-2001 |
| | | | | TW | 419543 | B | 21-01-2001 |
| | | | | WO | 9964649 | A1 | 16-12-1999 |
| WO 2007124521 | | A1 | 08-11-2007 | AT | 503625 | A1 | 15-11-2007 |
| | | | | CN | 101432476 | A | 13-05-2009 |
| | | | | CN | 103173938 | A | 26-06-2013 |
| | | | | EP | 2013390 | A1 | 14-01-2009 |
| | | | | EP | 2957667 | A1 | 23-12-2015 |
| | | | | ES | 2553182 | T3 | 04-12-2015 |
| | | | | JP | 5097771 | B2 | 12-12-2012 |
| | | | | JP | 2009535521 | A | 01-10-2009 |
| | | | | KR | 20080111521 | A | 23-12-2008 |
| | | | | US | 2009186189 | A1 | 23-07-2009 |
| | | | | WO | 2007124521 | A1 | 08-11-2007 |

EPO FORM P0459

For more details about this annex : see Official Journal of the European Patent Office, No. 12/82

**REFERENCES CITED IN THE DESCRIPTION**

**Patent documents cited in the description**

- WO 9826122 A
- WO 9947733 A
- WO 9807911 A
- US 6197230 B
- WO 9964649 A
- WO 05106085 A
- EP 1358369 A
- EP 2013390 A
- WO 07124521 A1
- WO 07124522 A1